# EUROPEAN PATENT SPECIFICATION

(11) **EP 1 530 026 B1**
(45) Date of publication and mention of the grant of the patent: **29.10.2008**
(21) Application number: 04256753.7
(22) Date of filing: 02.11.2004
(51) Int. Cl.: G08G 1/0969, G01C 21/36

(54) **Traffic-condition notifying device, system and method**
Vorrichtung, System und Verfahren zur Meldung des Verkehrszustands
Appareil, système et procédé pour la notification de l'état du trafic

(30) Priority: 04.11.2003 JP 2003374207
(43) Date of publication of application: 11.05.2005
(73) Proprietor: Pioneer Corporation, Tokyo 153-8654 (JP); Increment P Corporation, Tokyo 153-8665 (JP)
(72) Inventor: Nakano, Toshiaki, Meguro-ku Tokyo 153-8665 (JP); Amano, Kouji, Meguro-ku Tokyo 153-8665 (JP)
(74) Representative: Haley, Stephen

(56) References cited:
- EP-A- 0 994 449
- EP-A- 1 235 195
- US-A1- 2002 082 767
- US-A1- 2002 087 263
- US-A1- 2002 128 766

## Description

The present invention relates to a traffic-condition notifying device for notifying traffic conditions for a mobile body, its system, its method, its program, and a recording medium storing the program.

There has been a known in-vehicle navigation device that acquires traffic information (VICS data) on traffic accidents and congestion etc. from a Vehicle Information Communication System (VICS) and superimposes indications representing the traffic conditions such as the traffic accidents and the congestion on map information displayed on a screen of a display unit to notify them to users. In many cases, when congestion occurs, drivers who are avoiding the congestion might cause secondary congestion on the roads around the original congestion. The traffic condition notified based on the VICS data represents the current condition, and therefore the drivers avoiding the congestion based on the notified current traffic conditions might be caught in the secondary congestion. Thus, there is a demand for improved navigation devices that can navigate drivers to travel smoothly.

There is also a know in-vehicle navigation device that predicts and notifies the current and future traffic conditions with the use of a statistical congestion information data obtained by statistically processing the past congestion information (see, for example, Japanese Patent Laid-Open Publication No. Hei 9-113290, the right column on page 3 to the left column on page 7). An in-vehicle navigation device disclosed in the above publication notifies statistical congestion information according to time factors such as time and day of the week based on the statistical congestion data by superimposing the information on map information in various display forms corresponding to the congestion status. With the notified time and day of the week, users can predict current and possible future congestion.

However, traffic conditions vary depending on the factors such as the season, weather, day of the week etc. For example, congestion caused at a certain spot at a certain time does not necessarily mean that congestion will be caused at the same spot at the same time next week or the week after next. Therefore, even if the statistical congestion information obtained by statistically processing the past traffic information is notified as in the above publication, the information does not always match with the statistical congestion information. This fact leads to a demand for a traffic-condition notifying device capable of notifying more appropriate traffic conditions.

US2002/128766A1 discloses a navigational system.

An object of the present invention is to provide a traffic-condition notifying device capable of notifying appropriate traffic conditions, its system, its method, its program, and a recording medium storing the program.

According to a first aspect of the present invention there is provided a traffic-condition notifying device comprising:
a map information acquirer arranged to acquire map information;
a traffic information acquirer arranged to acquire traffic information about a current traffic condition for a mobile body;
a congestion prediction information acquirer arranged to obtain congestion prediction information based on statistical traffic information obtained by statistically processing past traffic conditions of mobile bodies; and
a notification controller arranged to control a notifier to notify the congestion prediction information together with the map information,
**characterised in that:**
the traffic condition notifying device further comprises an accuracy-level information acquirer arranged to acquire accuracy-level information representing a reliability of the congestion prediction information; and
the notification controller is further arranged to control the notifier to notify the accuracy-level information together with the congestion prediction information and map information.

According to a second aspect of the present invention, there is provided a traffic-condition notifying system comprising:
a server having storage arranged to store map information; and
a traffic-condition notifying device according to the first aspect arranged to acquire the map information from the server over a network.

According to a third aspect of the present invention, there is provided a traffic-condition notifying system comprising:
a traffic-condition notifying device according to the first aspect; and
a terminal unit that is connected to the traffic-condition notifying device over a network arranged to communicate therewith and provided with a notifier arranged to notify the traffic information.

According to a fourth aspect of the present invention, there is provided a traffic-condition notifying system comprising:
a terminal unit provided with a request information generator arranged to generate request information requesting a notification of a traffic condition, and a notifier arranged to notify traffic condition; and
a server that is connected to the terminal unit over a network arranged to communicate therewith and provided with a storage storing map information, a traffic information acquirer arranged to acquire traffic information about current traffic information for a mobile body, a congestion prediction information acquirer arranged to obtain a congestion prediction information based on statistical traffic information obtained by statistically processing past traffic conditions of mobile bodies, a request information acquirer arranged to acquire the request information, and a notification controller arranged to transmit the congestion prediction information to the terminal unit over the network so that the notifier of the terminal unit can notify the congestion prediction information when recognizing that the request information acquirer acquires the request information,
the system being characterised in that:
   the server is further provided with an accuracy-level information acquirer arranged to acquire accuracy-level information representing a reliability of the congestion prediction information; and
   the notification controller is further arranged to transmit the accuracy-level information to the terminal unit over the network so that the notifier can notify the accuracy-level information together with the congestion prediction information.

According to a fifth aspect of the present invention, there is provided a traffic-condition notifying method comprising:
acquiring map information, traffic information about a current traffic condition for a mobile body, and congestion prediction information based on statistical traffic
acquiring map information, traffic information about a current traffic condition for a mobile body, and congestion prediction information based on statistical traffic information obtained by statistically processing past traffic condition of mobile bodies; and
making a notifier notify the traffic information together with the map information,
characterised by:
   further acquiring accuracy-level information about a reliability of the congestion prediction information relative to an actual traffic condition; and
   making the notifier notify the accuracy-level information together with the traffic information and map information.

According to a sixth aspect of the present invention, there is provided a traffic-condition notifying program to execute the traffic-condition notifying method according to the fifth aspect by a computer.

According to a seventh aspect of the present invention, there is provided a recording medium storing the traffic-condition notifying program according to the sixth aspect in a manner readable by a computer.
Fig. 1 is a schematic block diagram showing a configuration of a navigation device according to a first embodiment of the present invention;
Fig. 2 is a conceptual illustration schematically showing a table structure for a display data of map information according to the first embodiment;
Fig. 3 is a conceptual illustration schematically showing a table structure for a matching data of the map information according to the first embodiment;
Fig. 4 is a conceptual illustration schematically showing a table structure for a data in a congestion-prediction table according to the first embodiment;
Fig. 5 is a schematic diagram showing a table structure for a data in a prediction information correction-master according to the first embodiment;
Fig. 6 is a conceptual illustration schematically showing a table structure for a data in a calendar template according to the first embodiment;
Fig. 7 is a schematic block diagram showing a configuration of a processor of the navigation device according to the first embodiment;
Fig. 8 is a schematic illustration showing an example of a screen-display of a terminal display according to the first embodiment;
Fig. 9 is a flowchart showing the processing for modifying the calendar template according to the first embodiment;
Fig. 10 is a conceptual illustration schematically showing the table structure for the data in the calendar template updated by a calendar modifier according to the first embodiment;
Fig. 11 is a flowchart showing the processing for travel route search according to the first embodiment;
Fig. 12A to Fig. 12C are schematic views each illustrating display-screens showing travel routes according to the first embodiment: Fig. 12A is a display-screen showing the result of the processing to search for a travel route to an arbitrary spot; Fig. 12B is a display-screen showing the result of the processing to search for a travel route to the spot, which is performed a certain time after the processing of Fig. 12A; and Fig. 12C is a display-screen showing the processing to search again for a travel route to the spot, which is performed a certain time after the processing of Fig. 12B;
Fig. 13 is a schematic block diagram showing a configuration of a navigation system according to a second embodiment of the present invention;
Fig. 14 is a schematic block diagram showing a configuration of a terminal unit according to the second embodiment;
Fig. 15 is a schematic block diagram showing a configuration of a processor of the terminal unit according to the second embodiment;
Fig. 16 is a schematic block diagram showing a configuration of a server according to the second embodiment;
Fig. 17 is a schematic block diagram showing a configuration of a CPU of the server according to the second embodiment;
Fig. 18 is a flowchart showing the processing for modifying a calendar template according to the second embodiment; and
Fig. 19 is a flowchart showing the processing for travel route search according to the second embodiment.

### [First Embodiment]

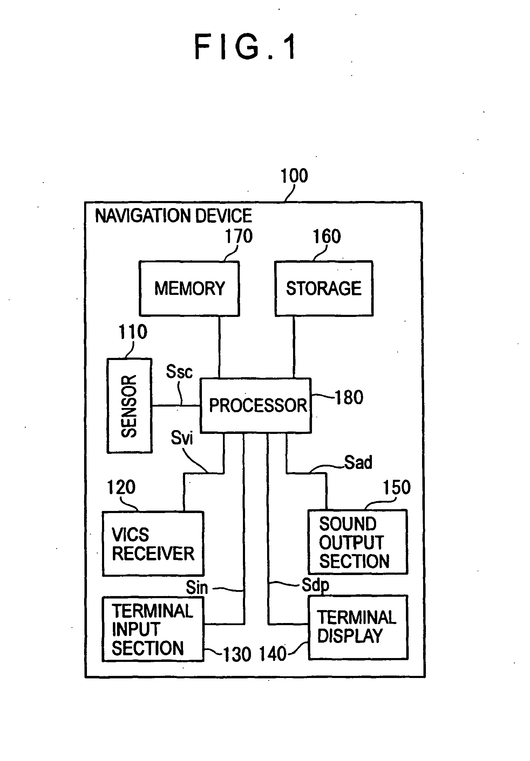

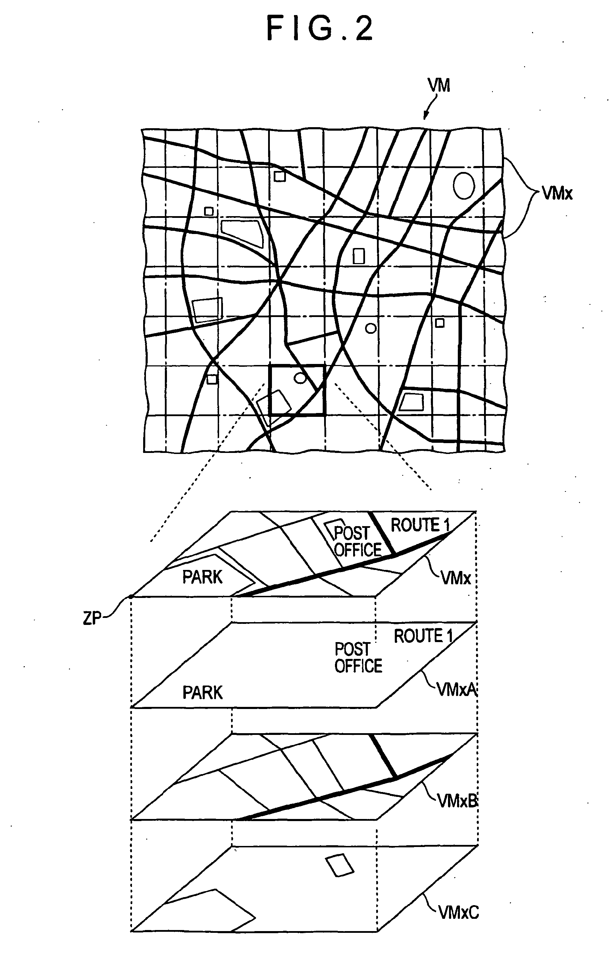

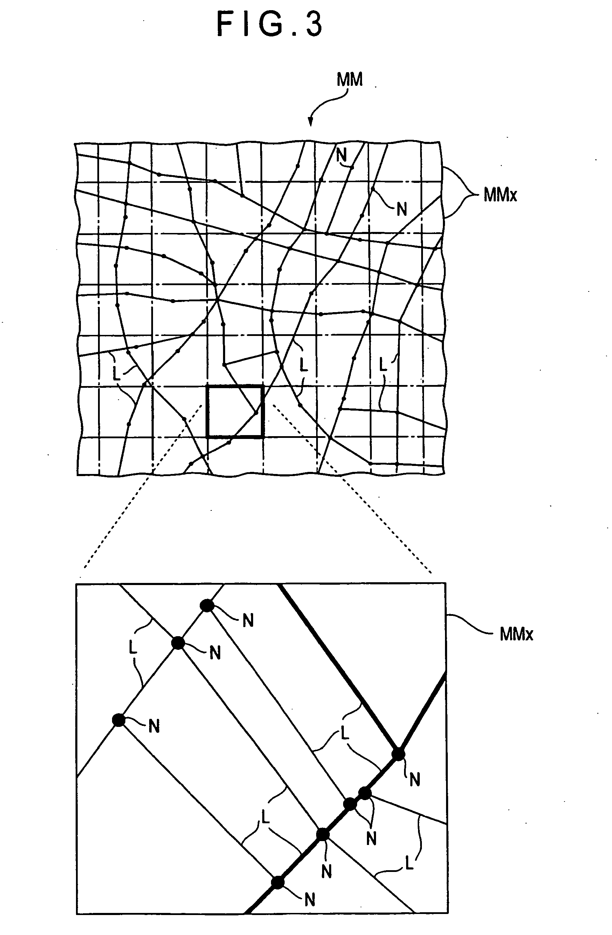

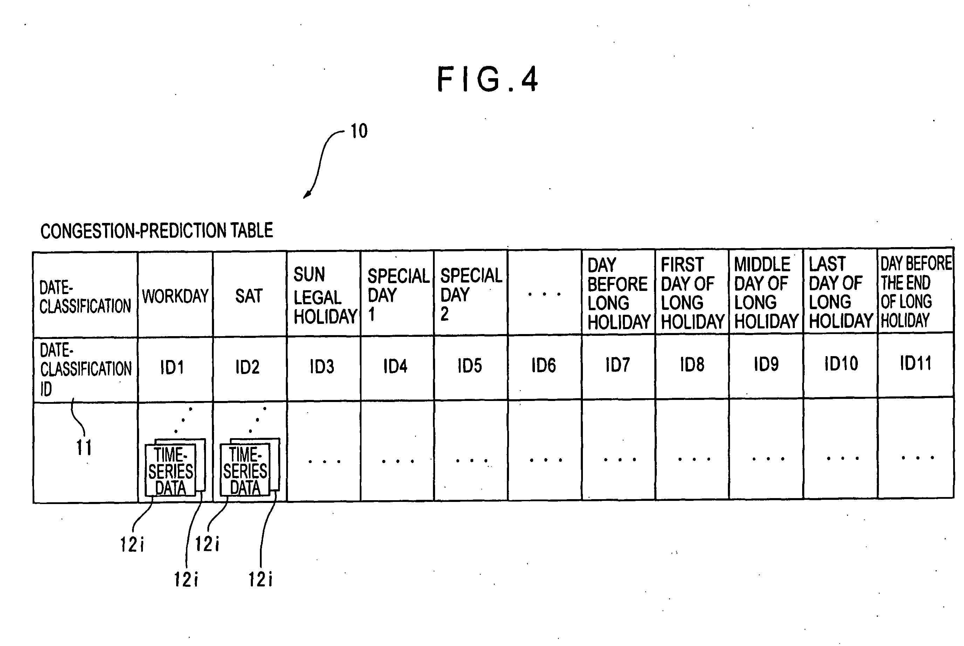

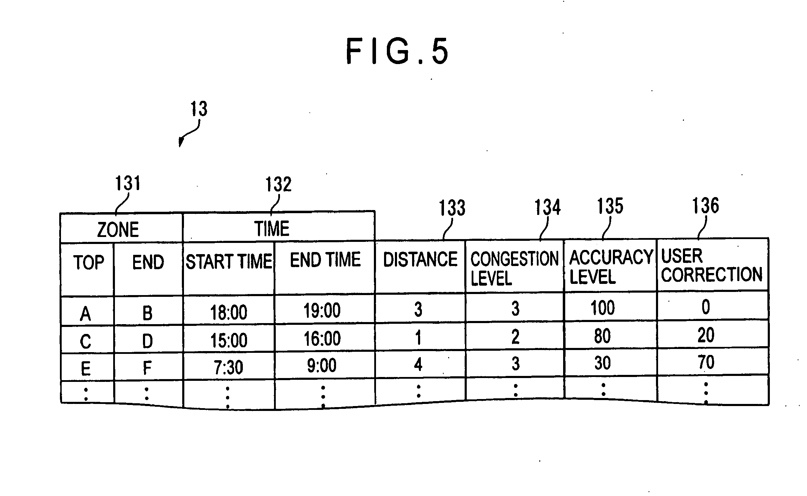

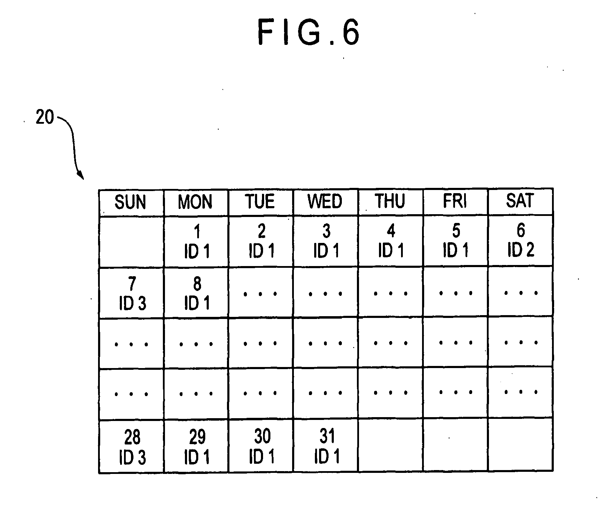

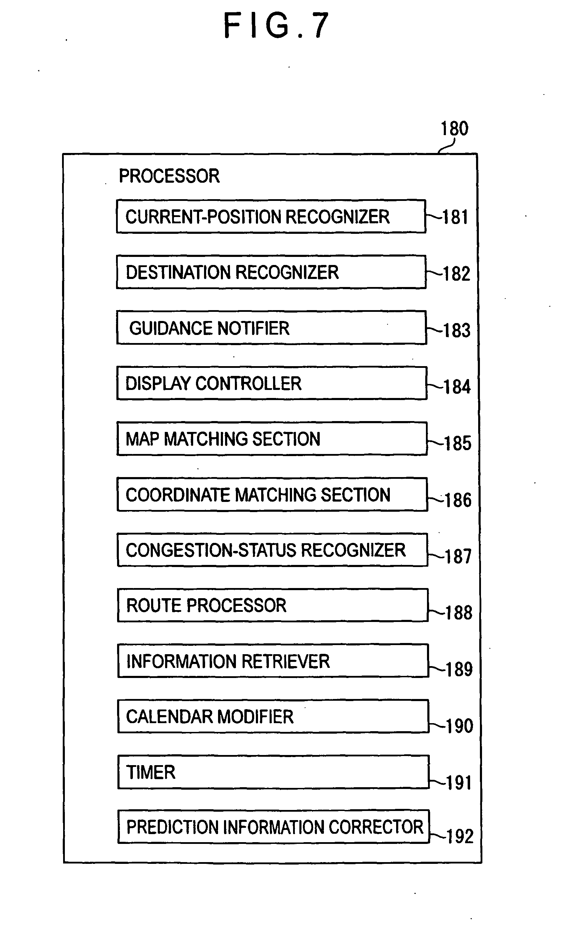

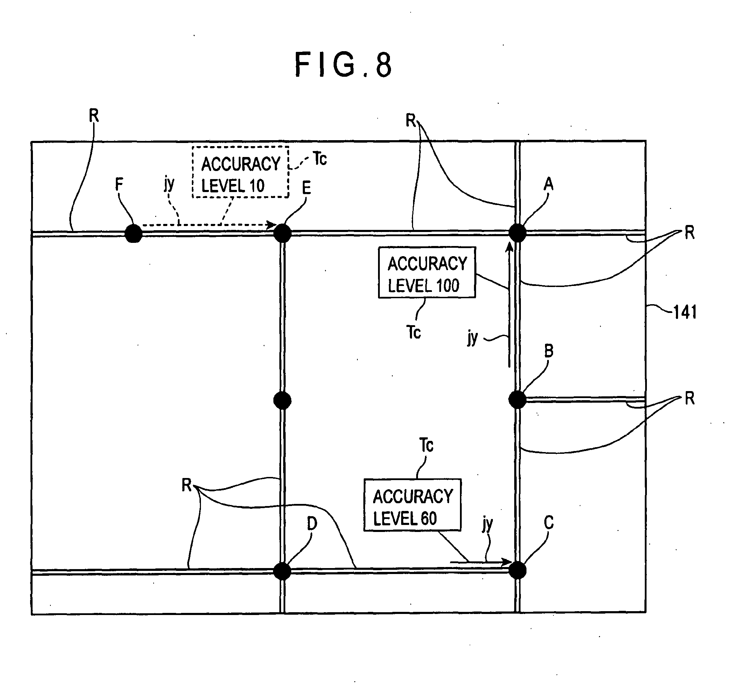

Now, a first embodiment of the present invention will be described with reference to the attached drawings. A navigation device of this embodiment is an example of a traffic-condition notifying device of the present invention, and so designed to navigate a mobile body (e.g. a vehicle) for the travel or drive thereof. It should be noted that the traffic-condition notifying device of the present invention is not necessarily designed to navigate a vehicle for the drive thereof, but may be so designed to notify traffic information for any types of mobile body. Fig. 1 is a schematic block diagram showing a configuration of the navigation device according to the first embodiment. Fig. 2 is a conceptual illustration schematically showing a table structure for a display data of map information. Fig. 3 is a conceptual illustration schematically showing a table structure for a matching data of the map information. Fig. 4 is a conceptual illustration schematically showing a table structure for a data in a congestion-prediction table. Fig. 5 is a schematic diagram showing a part of a table structure of the congestion-prediction table. Fig. 6 is a conceptual illustration schematically showing a table structure for a data in a calendar template. Fig. 7 is a block diagram schematically showing a configuration of a processor of the navigation device. Fig. 8 is a conceptual illustration showing surrounding area map information displayed on the screen of a terminal display.

### [Configuration of Navigation Device]

Referring to Fig. 1, the reference numeral 100 denotes the navigation device. The navigation device 100 notifies guidance on a travel along with a travel progress of a mobile body (e.g. a vehicle). The mobile body is not limited to vehicles, but includes any types of mobile body such as aircrafts and ships. The navigation device 100 may be, for example, an in-vehicle unit installed in a vehicle as a mobile body, a portable unit, a PDA (Personal Digital Assistant), a mobile phone, a PHS (Personal Handyphone System) or a portable personal computer. The navigation device 100 searches for and displays information about a current position and a destination, a route to the destination, predetermined shops nearby, and information about services offered by the shops on the basis of map information stored in the navigation device 100. As shown in Fig. 1, the navigation device 100 has a sensor 110, a VICS (Vehicle Information Communication System) receiver 120, a terminal input section 130 that operates as a request information generator, a terminal display 140, a sound output section 150 that operates as an audio section, a storage 160, a memory 170, a processor 180 and so on.

The sensor 110 detects the travel progress of a mobile body (e.g. a vehicle), or the current position and the driving status, and outputs it as a predetermined signal Ssc to the processor 180. The sensor 110 typically has a not-illustrated GPS (Global Positioning System) receiver and not-illustrated various sensors such as a speed sensor, an azimuth sensor and an acceleration sensor.

The GPS receiver receives electric navigation waves output from a GPS satellite (not shown), which is an artificial satellite, via a GPS antenna (not shown). Then, the GPS receiver computes simulated coordinate values of the current position on the basis of a signal corresponding to the received electric navigation waves and outputs the simulated coordinate values as a GPS data to the processor 180.

The speed sensor of the sensor 110 is arranged on a mobile body (e.g. a vehicle) so as to detect the driving speed and the actual acceleration of the vehicle on the basis of a signal that varies depending on the driving speed, or the travel speed, of the vehicle. The speed sensor reads a pulse signal, a voltage value and the like output in response to the revolution of the axles and the wheels of the vehicle. Then, the speed sensor outputs detection information such as the read pulse signal and the voltage value to the processor 180. The azimuth sensor is arranged on the vehicle and provided with a so-called gyro-sensor (not shown) so as to detect the azimuth of the vehicle, i.e., the driving direction for which the vehicle is heading. The azimuth sensor outputs a signal representing detection information about the detected driving direction to the processor 180. The acceleration sensor is arranged on the vehicle so as to detect the acceleration of the vehicle in the driving direction thereof. The acceleration sensor converts the detected acceleration into a sensor output value, which is detection information such as the pulse and the voltage, and then outputs the sensor output value to the processor 180.

The VICS receiver 120 has a VICS antenna (not shown) and acquires information about traffic via the VICS antenna. More specifically, the VICS receiver 120 acquires traffic information (hereinafter referred to as VICS data) about congestion, traffic accidents, constructions, traffic controls and so on from the VICS (not shown) by way of a beacon, FM multiplex broadcasting or the like. The acquired information about traffic is output as a predetermined signal Svi to the processor 180.

The VICS data has a table structure typically containing a plurality of following conceptual items formed as a single data.
· congestion level: congested, crowded, smooth, etc.
· top position information of congestion
· length information of congestion
· link travel time information: travel time required for a vehicle to pass through a VICS link (distance between intersections)
· zone travel time information: travel time required for a vehicle to pass through a zone longer than a VICS link
· information about traffic controls, causes thereof, controlled areas
· information about availability of parking areas
· information about rest areas and parking areas
· other information

The terminal input section 130, which may be a keyboard, a mouse or the like, has various operation buttons and operation knobs (not shown) to be used for input operations. The operation buttons and the operation knobs are used to input, for example, the settings for the operations of the navigation device 100. More specifically, they may be used: to set the type of information to be acquired and acquiring criteria; to set a destination; to retrieve information; and to display the driving status (travel progress) of the vehicle and contents describing changes in traffic conditions. When the settings are input, the terminal input section 130 outputs a predetermined signal Sin to the processor 180 so as to apply the settings. In place of the operation buttons and the operation knobs, the terminal input section 130 may include any types of input unit such as a touch panel that may be arranged at the terminal display 140 and a sound input section for the input operations thereof as long as various settings can be input.

The terminal display 140, under the control of the processor 180, displays a signal Sdp representing an image data sent from the processor 180. The image data may be those representing map information and retrieval information, TV image data received by a TV receiver (not shown), those stored in an external device or recording medium such as an optical disk, a magnetic disk or a memory card and read by a drive or a driver, and those in the memory 170. The terminal display 140 may typically be a liquid-crystal display panel, an organic EL (Electro Luminescence) panel, a PDP (Plasma Display Panel), a CRT (Cathode-Ray Tube), a FED (Field Emission Display), or an electrophoretic display.

The sound output section 150 has an audio section such as a speaker (not shown). The sound output section 150, under the control of the processor 180, outputs various signals Sad as sounds from the audio section. The various signals Sad represent the sound data etc. sent from the processor 180. Information output as sounds, which may be the driving direction and the driving status of the vehicle, are notified to occupants such as a driver of the vehicle for navigating the vehicle. The audio section may output a TV sound data received by a TV receiver (not shown) and a sound data stored in a storage medium or the memory 170. In place of the audio section, the sound output section 150 may use an audio section equipped on the vehicle.

The storage 160 readably stores map information as shown in Figs. 2 and 3 and a congestion-prediction table 10 as shown in Fig. 4. Although not shown, the storage 160 includes a map information storage area for storing the map information, a congestion-prediction table storage area for storing the congestion-prediction table 10 and a prediction information correction-master storage area for storing a prediction information correction-master 13. While the storage 160 has the above-mentioned three storage areas in the above description, the storage 160 may not have any of the above-mentioned storage areas, or may have additional storage areas. The storage 160 may be drives or drivers for readably storing a data on storage medium such as a HD (Hard Disk), a DVD (Digital Versatile Disk), an optical disks and a memory card.

The map information includes a display data VM, which is a so-called POI (Point Of Interest) data as shown in Fig. 2, a matching data MM as shown in Fig. 3, a route-search map data and the like.

The display data VM includes, for example, a plurality of display mesh information VMx, each having a unique number. To be more specific, the display data VM is divided into a plurality of display mesh information VMx, each relating to an area. The display data VM is constituted from the plurality of display mesh information VMx continuously arranged in a matrix form. The display mesh information VMx may be further divided into a plurality of display mesh information VMx to be contained in a lower layer, each relating to a smaller area. Each display mesh information VMx has a rectangular shape with each side thereof having a predetermined length, which is reduced relative to the actual geographic length according to the map scale. A predetermined comer thereof contains absolute coordinates ZP in the whole map information, e.g., a global map.

The display mesh information VMx is, for instance, constituted from name information VMxA such as intersection names, road information VMxB and background information VMxC. The name information VMxA is a data structured in a table for arranging and displaying a miscellaneous element data (e.g. intersection name, town name) contained in an area at a predetermined position with reference to the positional relationship based on the absolute coordinates ZP. The road information VMxB is a data structured in a table for arranging and displaying a road element data (e.g. road) contained in an area at a predetermined position with reference to the positional relationship based on the absolute coordinates ZP. The background information VMxC is a data structured in a table for arranging and displaying a miscellaneous element data (e.g. mark and image information representing famous spots and buildings) at a predetermined position with reference to the positional relationship based on the absolute coordinates ZP.

The matching data MM, just like the display data VM, is divided into a plurality of matching mesh information MMx, each having a unique number and relating to an area. The matching data MM is constituted from the plurality of matching mesh information MMx continuously arranged in a matrix form. The matching mesh information MMx may be further divided into a plurality of matching mesh information MMx to be contained in a lower layer, each relating to a smaller area. Each matching mesh information MMx has a rectangular shape with each side thereof having a predetermined length, which is reduced relative to the actual geographic length according to the map scale. A predetermined comer thereof contains absolute coordinates ZP in the whole map information, e.g., a global map. The matching mesh information MMx and the display mesh information VMx may not necessarily represent the same area. That is, they may be divided according to different scales. If a same scale is used, unique number information may be used for associating the data. If a different scale is used, the absolute coordinates may be used for associating the data.

The matching data MM is used for the map matching processing for correcting the displayed information to locate a mark representing the vehicle on a road, when the travel progress of the vehicle is superimposed on the map information. This processing prevents such errors that the mark representing the vehicle is displayed on a building instead of the road. The matching data MM has a plurality of link string block information.

As shown in Fig. 3, the link string block information is a data structured in a table so that a plurality of links L are mutually associated according to a predetermined rule. The link L as segment information represents a road and connects nodes N as the point information. Specifically, the links L each corresponding to a predetermined segment of a road are mutually connected to form polygonal lines (i.e. link strings), which represent continuous roads such as Koshu street and Ome street. Each link L has segment-specific information (hereafter referred to as a link ID) as a unique number assigned to each link L, and node information as a unique number indicating two nodes N connected by the link L. Each link L is associated with a VICS link to match the positional relationship between the VICS data and the displayed map.

Each node N represents a joint point such as an intersection, a comer, a fork, a junction or the like of each road. Information about the node N has point-specific information as a unique number assigned to each node N in the link string block information, coordinate information of the position where each node N is located, and flag information as branching information describing whether or not the node N represents a branching position (e.g. intersection, fork) where a plurality of links are crossed. Some nodes N only have the point-specific information and the coordinate information without the flag information for simply representing the shape of a road, and some nodes N additionally have attribute information representing the road structure such as width of a tunnel or a road. The nodes N without the flag information for simply representing the road shapes are not used when a coordinate matching section 186 (which will be described later) identifies a point.

Further, the link string block information of the matching data MM is associated with information about the road structure that describes, for example, the number of lanes, whether it is a main line or not, whether it is a national road or a state road, a road type such as a toll road, a tunnel structure and the like. Based on the information about the road structure, roads can be displayed on a map corresponding to the display data VM.

The route-search map information is structured in a table, which is similar to that of the matching data MM, including the point information for representing points such as the nodes N for representing roads, and the segment information for connecting points such as the links L. The information is so structured to represent roads for searching for a travel route.

The congestion-prediction table 10, which includes statistical traffic information obtained by statistically processing the past traffic conditions based on time factors, is a data set for showing traffic conditions in the past at an arbitrary spot. The congestion-prediction table 10 is used to predict the congestion status at the processing for travel route search and the processing for displaying a map. The congestion-prediction table 10, as shown in Fig. 4, has a table structure storing a plurality of records, each single record containing a date-classification ID (identification) 11, a time-series data 12i (i representing a natural number) and the like.

The date-classification ID 11 is typically an ID number representing a classification of date and day of the week. In the following description, classification of date and day of the week will be referred to as date classification. For example, "ID1" may indicate any "workday" such as Monday to Friday excluding legal holidays; "ID2" may indicate "Saturday" excluding legal holidays; "ID4" may indicate "special day 1" such as a festival day of City X; "ID5" may indicate "special day 2" such as a day when a sports meeting is held at Athletic Ground Y; "ID7" may indicate "the day before a long holiday" such as the day before four consecutive holidays; and "ID 11" may indicate "the day before the end of a long holiday" such as the third day of four consecutive holidays. The date-classification ID 11 is not limited to the ID number, but may alternatively be a text data directly related to a day such as "workday".

The time-series data 12i is a data on the tendency of the congestion status of the traffic conditions. For example, a VICS data may be acquired from the VICS and stored for each VICS link, and then statistically processed for every 10 minutes based on the time factor of the stored VICS link (i.e. date classification) so as to be used as the time-series data 12i. In other words, the time-series data 12i is a data representing the congestion status at desired spots (which might be each VICS link) for every predetermined time, such as the length of the congestion, the congestion status representing the congestion level and the time required for passing through the congestion. While the time-series data 12i described above is a data generated by statistically processing the data for each spot based on the time factor, it may alternatively be generated for each facility, shop, area, city and town, or road.

In the prediction information correction-master 13, for example, various information of the time-series data 12i and information about the reliability of the various information are structured as a single table structure. To be more specific, the prediction information correction-master 13, as shown in Fig. 5, has a table structure containing congestion-zone information 131, congestion-time information 132, congestion-distance information 133, congestion-level information 134, accuracy-level information 135 and user-correction information 136 formed as a single data.

The congestion-zone information 131 is the information describing top information indicating the top position of the congestion and end information describing the end position thereof.

The congestion-time information 132 describes start-time information indicating the estimated time that the congestion occurs and end-time information indicating the estimated time that the congestion is sorted out.

The congestion-distance information 133 describes the information about the length of the congestion, or the length from the top position of the congestion indicated by the top information in the congestion-zone information 131 to the end position indicated by the end information. The information described in the congestion-distance information 133 may be, for example, the information indicating the actual distance in kilometers or the information indicating the relative distance with respect to a predetermined distance defined as 1.

The congestion-level information 134 numerically represents the congestion status. That is, the congestion status is represented in numerical terms. For example, the congested status is represented as "3"; the crowded status is represented as "2"; and the status in which vehicle can travel smoothly free from congested/crowded status is represented as "1". Note that the congestion-level information 134 does not necessarily represent the congestion status in numerical terms but in other terms.

The accuracy-level information 135 is the information numerically representing the reliability of the information 131, 132, 133 and 134 contained in the same record where the accuracy-level information 135 is contained. The accuracy-level information 135 is so defined that larger values mean higher reliability whereas smaller values mean the lower reliability. The accuracy-level information 135 can be appropriately changed by the processor 180. For instance, when a user operates the terminal input section 130 to input that the actual traffic conditions do not match with the respective information 131, 132, 133 and 134, the processor 180 reduces the value of the accuracy-level information 135 by 1. Note that the accuracy-level information 135 does not necessarily represent the reliability of the respective information 131, 132, 133 and 134 in numerical terms but in other terms.

The user-correction information 136 is the information numerically representing the number that the accuracy-level information 135 is updated. The user-correction information 136 can be appropriately changed by the processor 180. For instance, when a user operates the terminal input section 130 to input that the actual traffic conditions do not match with the respective information 131, 132, 133 and 134, the processor 180 increases the value of the user-correction information 136 by 1. Note that the user-correction information 136 does not necessarily represent the number that the accuracy-level information 135 is updated in numerical terms but in other terms.

While the configuration where the prediction information correction-master 13 has the above-mentioned various information is described in the above description, the configuration is not limited thereto and other configurations may be applicable.

The storage 160 typically stores the retrieval information for acquiring information of a predetermined point in the map information. More specifically, the retrieval information includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The memory 170 readably stores the settings that are input by the terminal input section 130, a music data and an image data as well as a plurality of calendar templates 20 as shown in Fig. 6. The memory 170 also stores various programs that run on the OS (Operating System) controlling the whole operation of the navigation device 100. The memory 170 may preferably be a CMOS (Complementary Metal-Oxide Semiconductor) memory that retains the stored data even in the case of a sudden power interruption caused by a blackout. The memory 170 may include drives or drivers for readably storing a data on a storage medium such as a HD, a DVD, and an optical disk.

The calendar template 20 is a template representing a date classification of each date. More specifically, the calendar template 20 has a table structure storing a plurality of table data for every month, typically twelve table data. The respective table data have a plurality of records, each containing date information about date, classification ID numbers associated with respective dates of the date information.

The classification ID number is identical to one of the date-classification IDs 11 in the congestion-prediction table 10 and indicates the date classification of the date specified by the date information. For example, Friday 5th is classified as "workday" associated with "ID1", and Monday 15th is classified as "legal holiday" associated with "ID3". The classification ID number of the calendar template 20 can be changed by the processor 180 if necessary. The classification ID number is not limited to numerical values, but may alternatively be a text data (e.g. "workday") corresponding to the date-classification ID in the congestion-prediction table 10.

The processor 180 has various input/output ports (not shown) including a VICS receiving port connected to a VICS antenna, a GPS receiving port connected to a GPS receiver, sensor ports respectively connected to various sensors, a key input port connected to the terminal input section 130, a display control port connected to the terminal display 140, a sound control port connected to the sound output section 150, a storage port connected to the storage 160 and a memory port connected to the memory 170. As shown in Fig. 7, the processor 180 has various programs such as a current-position recognizer 181, a destination recognizer 182, a guidance notifier 183 that operates as a notification controller, a display controller 184 that operates as a notification controller, a map matching section 185, a coordinate matching section 186, a congestion-status recognizer 187 that operates as a map information acquirer, a traffic information acquirer, an accuracy-level information acquirer, a travel-progress recognizer, a request information acquirer, a traffic-condition recognizer and a corrected-content information acquirer, a route processor 188, an information retriever 189, a calendar modifier 190, a timer 191, and a prediction information corrector 192 that operates as a corrected-content information acquirer and an accuracy-level changer.

The current-position recognizer 181 recognizes the current position of the vehicle. More specifically, it calculates a plurality of current simulated positions of the vehicle on the basis of the speed data and the azimuth data of the vehicle output respectively from the speed sensor and the azimuth sensor of the sensor 110. The current-position recognizer 181 further recognizes the current simulated coordinate values of the vehicle on the basis of the GPS data on the current position output from the GPS receiver. Then, the current-position recognizer 181 compares the calculated current simulated positions with the recognized current simulated coordinate values, and calculates the current position of the vehicle on map information separately acquired so as to recognize the current position.

The current-position recognizer 181 determines a slope angle and an altitude of a road to drive on the basis of the acceleration data output from the acceleration sensor and calculates the current simulated position of the vehicle so as to recognize the current position. Thus, the current position of the vehicle can be accurately recognized even if the vehicle is on an intersection with an overpass or on an elevated highway where roads are overlaid in a two-dimensional view. Furthermore, when the vehicle runs on a mountain road or a slope, the current-position recognizer 181 corrects the discrepancy between the travel distance obtained only on the basis of the speed data and the azimuth data and the actual driving distance by using the detected slope angle of the road to accurately recognize the current position.

The current-position recognizer 181 can recognize not only the current position of the vehicle as described above but also a starting point, i.e. an initial point set by the terminal input section 130 as the current simulated position. Various information acquired by the current-position recognizer 181 are appropriately stored in the memory 170.

The destination recognizer 182 typically acquires the destination information about the destination set by the input operation at the terminal input section 130 and recognizes the position of the destination. The destination information to be set includes various information for identifying a spot, which might be coordinates such as latitude and longitude, addresses, telephone numbers and the like. Such destination information recognized by the destination recognizer 182 is appropriately stored in the memory 170.

The guidance notifier 183 provides guidance stored in the memory 170 in visual form by using the terminal display 140 or in audio form by using the sound output section 150 on the basis of travel route information and feature guidance information acquired in advance according to the driving status. The guidance is related to the travel of the vehicle, which may be the contents for assisting the drive of the vehicle. For example, a predetermined arrow and a sign representing the traffic information such as the congestion status, the predicted congestion information and the accuracy level of the congestion status may be displayed on the screen of the terminal display 140, or a voice guidance such as "Turn right toward XX at the intersections of YY 700m ahead", "The vehicle is off the travel route" or "The route ahead is congested" may be provided from the sound output section 150.

The display controller 184 also controls to display various display-screens for prompting the user to operate the terminal input section 130 so as to set various information. The display controller 184 appropriately controls the terminal display 140 and displays the display-screens showing surrounding area map information 141 shown in Fig. 8 as notification map information, and various information other than the surrounding area map information 141 on the terminal display 140.

For displaying the surrounding area map information 141 on the terminal display 140, the display controller 184 typically performs the following processing. The display controller 184 displays the surrounding area map information 141 having a plurality of road information R. Then, based on the congestion-zone information 131 contained in an uppermost record of the prediction information correction master 13, for example, the display controller 184 superimposes point information A and point information B on the surrounding area map information 141.

Further, based on the congestion-zone information 131, the congestion-distance information 133 and the congestion-level information 134 of the record, the display controller 184 superimposes a congestion-prediction mark Jy on the surrounding area map information 141.

In the step of displaying the congestion-prediction mark Jy, the display controller 184 determines the display position of the congestion-prediction mark Jy based on the congestion-zone information 131. More specifically, it determines to display the congestion-prediction mark Jy at a position near a road R between the point information A and B indicated by the congestion-zone information 131. Also, based on the congestion-distance information 133, the display controller 184 determines the length of the congestion-prediction mark Jy. Thereafter, based on the congestion-level information 134, the display controller 184 determines the display form of the congestion-prediction mark Jy. For instance, the congestion-prediction mark Jy may be displayed in: red if the congestion-level information 134 is "3"; yellow if the congestion-level information 134 is "2"; or transparent if the congestion-level information 134 is "1". While the display form of the congestion-prediction mark Jy is determined in the above manner in the above description, the display form is not limited thereto. For instance, the width of the congestion-prediction mark Jy may be determined based on the congestion-level information 134.

Further, based on the congestion-zone information 131 and the accuracy-level information 135, the display controller 184 superimposes an accuracy-level mark Tc on the surrounding area map information 141.

In the step of displaying the accuracy-level mark Tc, the display controller 184 determines the display position of the accuracy-level mark Tc based on the congestion-zone information 131. More specifically, it determines to display the accuracy-level mark Tc at a position near the road R between the point information A and B displayed based on the congestion-zone information 131. The value contained in the accuracy-level information 135 is displayed in text as the accuracy-level mark Tc. While the accuracy-level information 135 is displayed in text in the above description, it may be displayed in the following forms. For example, but without limitation, the accuracy-level information 135 may be displayed in: blue if the value of the accuracy-level information 135 is not less than 0 and not more than 30; green if the value is not less than 30 and not more than 60; or red if the value is not less than 60. Alternatively, the accuracy-level information 135 may be hidden if the value is less than a predetermined threshold (a dotted line shown in Fig. 8).

The map matching section 185 performs the map matching processing for displaying the current position recognized by the current-position recognizer 181 based on the map information obtained from the storage 160. As described earlier, the map matching section 185 typically uses the matching data MM for performing the map matching processing to modify or correct the current-position information to prevent the current position superimposed on the map on the terminal display 140 from being located off the road in the map on the terminal display 140.

The coordinate matching section 186 performs the coordinate matching processing for determining whether or not point information about nodes N contained in the matching data MM of the map information acquired from the storage 160 indicate an identical point. In other words, as described earlier, the coordinate matching section 186 acquires point information of nodes N contained in the matching data MM and reads the coordinate information of the point information. More specifically, the coordinate matching section 186 calculates the coordinate values such as the latitude and the longitude on the basis of the coordinate values of the coordinate information and the offset amount. If different nodes N have identical coordinate values, it reads the flag information of the point information of the nodes N to determine whether the nodes N represent the identical point. If the coordinate matching section 186 determines that the nodes N are identical, it recognizes that the links L respectively connected to the nodes N and contained in the different link string block information are crossed with each other, and thus considers as, for example, an intersection. If, on the other hand, the coordinate matching section 186 determines that the nodes N are not identical, it recognizes that the links L respectively connected to the nodes N and contained in the different link string block information are not crossed with each other, and thus considers as, for example, a multi-level intersection.

The congestion-status recognizer 187 generates current-congestion information about the congestion that are currently present. More specifically, the congestion-status recognizer 187 appropriately acquires the VICS data from the VICS output from the VICS receiver 120. Then, based on the acquired VICS data, it generates current-congestion information (current traffic information) about the congestion that are currently present in an area including, for example, the current position and the destination or in a predetermined area around the current position.

Additionally, the congestion-status recognizer 187 calculates the expected arrival time as an expected time to arrive at a desired destination. Then based on the calculated expected arrival time, preset scheduled time, the time-series data 12i and the prediction information correction-master 13, the congestion-status recognizer 187 generates congestion-prediction information (traffic prediction information) about predictions of the congestion that may arise at any spots before arriving at the destination or at the preset scheduled time.

More specifically, the congestion-status recognizer 187 recognizes the classification ID number of the date for which congestion prediction will be performed on the basis of the time information acquired from the timer 191 and the calendar template 20. Then, the congestion-status recognizer 187 retrieves and acquires the time-series data 12i for the area corresponding to the recognized classification ID number and including the current position and the destination from the congestion-prediction table 10. After that, based on the current-congestion information and current-time information acquired from the timer 191, the congestion-status recognizer 187 calculates the expected arrival time to arrive at a desired spot on a candidate travel route specified by candidate travel route information (which will be described later) generated by the route processor 188.

The expected arrival time may be calculated with a method below, for example. Firstly, the distance to a desired spot on the candidate travel route is recognized based on the candidate travel route information, and the time required to travel the recognized distance is calculated based on the current-congestion information. Subsequently, the expected arrival time is calculated on the basis of the calculated required time and the current time.

Based on the candidate travel route information and the expected arrival time information, a record containing the congestion-zone information 131 including the desired spot on the candidate travel route indicated by the candidate travel route information is retrieved and acquired from the prediction information correction-master 13 stored in the storage 160. The congestion-status recognizer 187 thus generates congestion-prediction information having the acquired record.

The route processor 188 searches for a travel route by computing the driving route of the vehicle on the basis of the setting information that is set by a user for setting the route as well as the map information stored in the storage 160. The route processor 188 can compute the travel route by taking the current-congestion information and the congestion-prediction information generated by the congestion-status recognizer 187 into consideration when the processor 180 recognizes congestion-prediction request information requesting a travel route search with the congestion information and the congestion prediction considered.

More specifically, if the setting information does not contain the congestion-prediction request information, the route processor 188 acquires the current position, the destination, the setting information and the current-congestion information. Then, based on the acquired information, the route processor 188 searches for available roads, where for example traffic is allowed, using the route-search map information of the map information, and generates travel route information for setting a route with a shorter required time, a route with a shorter distance, or a route without congestion and traffic controls. After that, it determines the time required to arrive at the destination for each of the routes contained in the travel route information and generates required-time information about the required time.

If, on the other hand, the setting information contains the congestion-prediction request information, the route processor 188 acquires the current position, the destination, the setting information and the current-congestion information. Then, based on the acquired information, it generates candidate travel route information for setting a route with shorter travel time, a route with shorter travel distance, or a candidate route without congestion and traffic controls. The route processor 188 acquires the current-congestion information and the congestion-prediction information and reduces the number of the candidate route contained in the candidate travel route information based on the acquired information, and thus generates travel route information for setting a route etc. After that, it determines the time required to arrive at the destination for each of the routes contained in the travel route information and generates required-time information about the required time.

In the step of searching for the travel route, the route processor 188 might use the matching data MM of the map information in addition to the route-search map information. This applies to, for instance, the case where the route processor 188 searches for the travel route including a narrow road such as a back street not contained in the route-search map information. When the matching data MM is used, the route is appropriately searched according to the road arrangement recognized by the coordinate matching section 186. The travel route information typically includes route guidance information for navigating the vehicle during the drive thereof for assisting the drive. Under the control of the guidance notifier 183, the route guidance information may be appropriately displayed on the terminal display 140 or output as sounds from the sound output section 150 to assist the drive.

The information retriever 189 hierarchically retrieves and acquires the retrieval information, such as shops and facilities, stored in the storage 160 on the basis of the item information in response to, for example, a retrieval request for the retrieval information set at the terminal input section 130.

The calendar modifier 190 appropriately updates the calendar template 20 stored in the memory 170 on the basis of modifications set by the user. More specifically, the calendar modifier 190 recognizes various information set by the input operations of the user at the terminal input section 130. This information may include date information for specifying date and event information about events such as festivals and sports meeting. Then, the calendar modifier 190 recognizes the date specified by the date information, and also recognizes the classification ID number associated with the event information. The classification ID number may be typically recognized as follows. The date classification is determined based on the set event information, and the classification ID number is recognized based on the determined date classification. If, for example, the event information relates to a sports meeting to be held at Athletic Ground Y, the date classification is determined as "special day 2", and the classification ID number is recognized as "ID5" based on the "special day 2". If the event information relates to the last day of five consecutive holidays, the date classification is recognized as "the last day of a long holiday" and the classification ID number as "ID10" based on the "last day of a long holiday". Then, the calendar modifier 190 appropriately modifies the calendar template 20 on the basis of the recognized date and the classification ID number.

The timer 191 recognizes the current time typically based on the pulse of an internal clock. Then, the timer 191 appropriately outputs time information about the recognized current time.

The calendar modifier 192 appropriately updates the prediction information correction-master 13 stored in the storage 160 on the basis of accuracy information set by the user. Specifically, the prediction information corrector 192 appropriately determines whether or not the current position of the vehicle recognized by the current position recognizer 181 and the zone indicated by the congestion-zone information 131 contained in the record included in the congestion-prediction information generated by the congestion-status recognizer 187 are overlapped. If the prediction information corrector 192 determines that the current position and the zone are not overlapped, it does not perform any particular processing. If, on the other hand, the prediction information corrector 192 determines that the current position and the zone are overlapped, it controls the terminal display 140 and the sound output section 150 to prompt the user to input the accuracy information about changes of traffic conditions indicating whether or not the information about the congestion at the current position of the vehicle displayed on the terminal display 140 substantially matches with the actual traffic conditions. Upon recognizing the accuracy information input by the user, the prediction information corrector 192 appropriately corrects the record included in the congestion-prediction information based on the recognized accuracy information. For example, if the input accuracy information describes that the congestion-prediction information displayed on the terminal display 140 substantially matches with the actual traffic conditions, the prediction information corrector 192 does not perform any particular processing. If, on the other hand, the input accuracy information describes that the information displayed on the terminal display 140 does not substantially match with the actual traffic conditions, the prediction information corrector 192 reduces the value of the accuracy-level information 135 contained in the record included in the congestion-prediction information and increases the value of the user-correction information 136.

While the prediction information corrector 192 does not perform any particular processing in the case that the input accuracy information describes that the congestion-prediction information displayed on the screen substantially matches with the actual traffic conditions in the above description, the operation is not limited thereto. If the input accuracy information describes that the congestion-prediction information substantially matches with the actual traffic conditions, the prediction information corrector 192 may increase the value of the accuracy-level information 135 contained in the record included in the congestion-prediction information and increases the value of the user-correction information 136. Namely, the accuracy level is raised when the congestion prediction accurately describes the actual traffic conditions, whereas the accuracy level is lowered when the congestion prediction does not accurately describe the actual traffic conditions.

Then, the prediction information corrector 192 retrieves the same record as the congestion-zone information 131 and the congestion-time information 132 included in the congestion-prediction information, or the record that is used for generating the congestion-prediction information by the congestion-status recognizer 187, from the prediction information correction-master 13 stored in the storage 160. After that, the prediction information corrector 192 updates the retrieved record to the corrected record. In the step of updating the record, it may only update the accuracy-level information 135 and the user-correction information 136.

### [Operation of Navigation device]

Now, the operation of the navigation device 100 will be described with reference to the drawings.

### (Processing for Modifying Calendar Template)

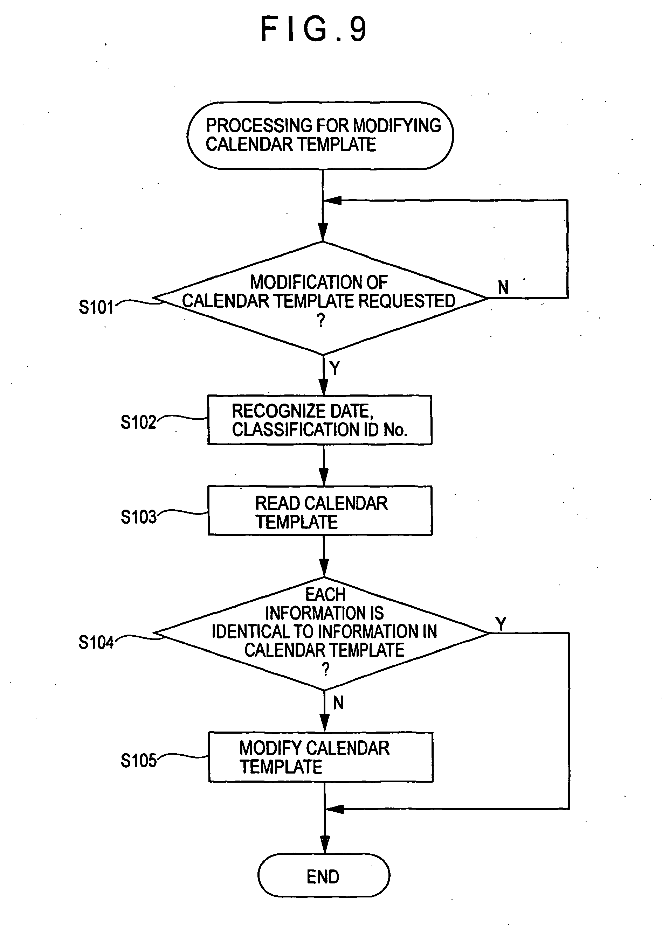

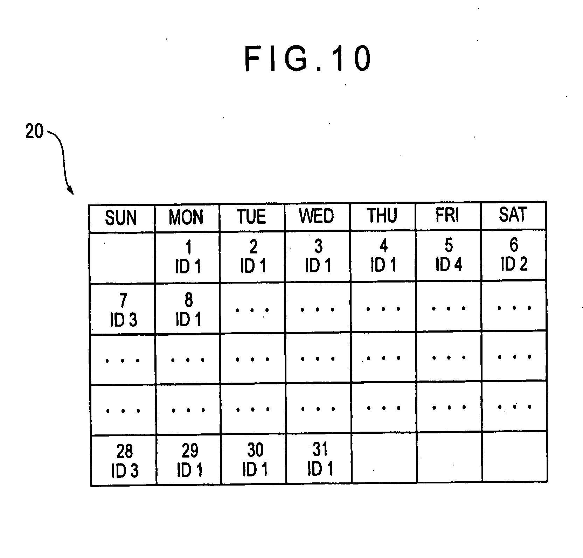

Firstly, the processing for modifying the calendar template 20 as one of the operations of the navigation device 100 will be described with reference to Figs. 9 and 10. Described herein is the processing for modifying the calendar template 20 as shown in Fig. 6 based on the information about, for example a festival scheduled on 5th in City X, that a user has recognized from the radio or TV broadcastings, printed information sources such as newspapers and official publications or acquired by connecting his or her mobile phone via the mobile phone line. Fig. 9 is a flowchart showing the processing for modifying a calendar template. Fig. 10 is a conceptual illustration schematically showing the table structure for the data in the calendar template updated by the calendar template modifier.

Firstly, the user in the vehicle switches on the navigation device 100 to supply the power thereto. When the power is supplied, the processor 180 controls the terminal display 140 to display a main menu and a screen for prompting the user to set a specific operation to be executed by the navigation device 100.

Then, as shown in Fig. 9, the user operates the terminal input section 130 to set a command for modifying the calendar template 20. When the processor 180 recognizes the set command for modifying the calendar template 20 at the calendar modifier 190 (Step S101), it makes the terminal display 140 display a screen for prompting the user to set the date information and the event information necessary for modifying the calendar template 20.

When the user sets the date information and the event information by operating the terminal input section 130 following the instructions on the displayed screen, the calendar modifier 190 acquires the set date information and the event information. The user may set the date information and the event information by inputting characters thereof or selecting from a plurality of candidates displayed on the terminal display 140. Alternatively, a following method may be used. Firstly, the user selects a date by operating the terminal input section 130 and moving a flashing cursor displayed in or around the area of a date in the calendar template 20 as shown in Fig. 6. Then, the user sets the event information of the selected date by inputting characters or by selecting from a plurality of event information being displayed.

After acquiring the date information and the event information, the calendar modifier 190 recognizes the acquired various information (Step S102). More specifically, the calendar modifier 190 recognizes the date specified by the date information and the classification ID number associated with the event information. In this example, the calendar modifier 190 recognizes the date specified by the date information as 5th. Also, it determines the date-classification associated with the event information as "special day 1" for a festival to be held in City X, and recognizes the classification ID number as "ID4" based on the determined date classification.

Thereafter, the calendar modifier 190 reads out the calendar template 20 stored in the memory 170 (Step S103). Then, the calendar modifier 190 determines whether or not the information recognized in the Step S102 is identical to the information in the calendar template 20 read in the Step S103 (Step S104). More specifically, it recognizes the classification ID number associated with the date recognized in the step S102 based on the read calendar template 20. Then, it determines whether or not the classification ID number recognized based on the calendar template 20 is identical to the classification ID number recognized in the Step S102.

If the calendar modifier 190 determines in the Step S104 that the classification ID numbers are identical, it ends the processing without modifying the calendar template 20. If, on the other hand, the calendar modifier 190 determines that the classification ID numbers are not identical, it modifies the calendar template 20 on the basis of the various information recognized in the Step S102 (Step S105) and ends the processing. More specifically, since the classification ID number of the 5th recognized in the Step S102 is "ID4" and the classification ID number of the 5th recognized based on the calendar template 20 is "ID1", the calendar modifier 190 changes the classification ID number of the 5th from "ID1" to "ID4" as shown in Fig. 10 and ends the processing.

### (Processing for Travel Route Search)

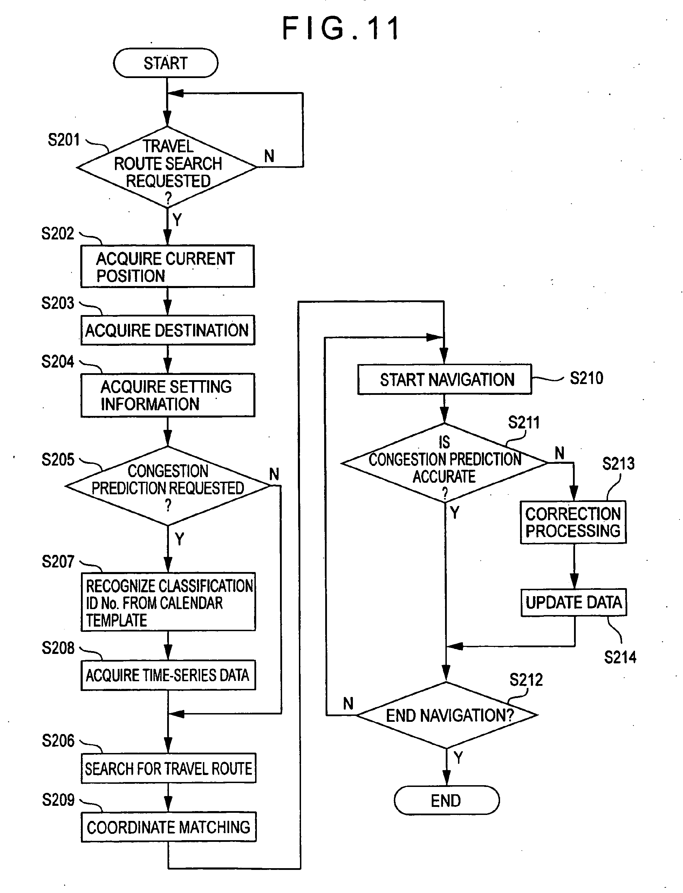

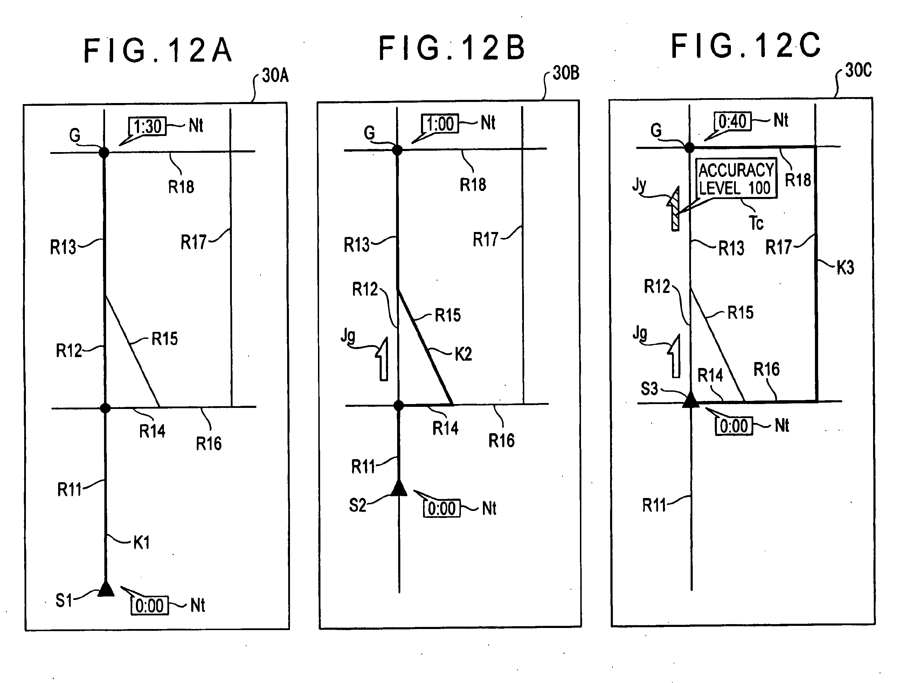

Now, the processing for travel route search as one of the operations of the navigation device 100 will be described with reference to Figs. 11 to 12C. Fig. 11 is a flowchart showing the processing for travel route search in the navigation device. Fig. 12A to Fig. 12C are schematic views each illustrating display-screens showing travel routes: Fig. 12A is a display-screen showing the result of the processing to search for a travel route to an arbitrary spot; Fig. 12B is a display-screen showing the result of the processing to search for a travel route to the spot, which is performed a certain time after the processing of Fig. 12A; and Fig. 12C is a display-screen showing the processing to search again for a travel route to the spot, which is performed a certain time after the processing of Fig. 12B.

Firstly as shown in Fig. 11, the user operates the terminal input section 130 to set a command for searching for a travel route. When the processor 180 recognizes the set command for searching for a travel route (Step S201), the processor 180 makes the terminal display 140 display a screen for prompting the user to set various information necessary for travel route search such as the destination, the setting information about the preference for shortest travel distance or shortest travel time and necessity of the congestion prediction.

When the processor 180 recognizes the various information necessary for the travel route search, the current-position recognizer 181 recognizes the current position (Step S202) and the destination recognizer 182 recognizes the set destination (Step S203). Specifically, the current-position recognizer 181 calculates the current position of the vehicle on the basis of the speed data and the azimuth data of the vehicle respectively output from the speed sensor and the azimuth sensor of the sensor 110 and the GPS data about the current position output from the GPS receiver, and acquires the current-position information. The acquired current-position information is appropriately stored in the memory 170.

The processor 180 controls the terminal display 140 to display a screen for prompting the user to set the destination with the input operation at the terminal input section 130. Then, when the user sets the destination by operating the terminal input section 130 following the instructions on the displayed screen, the destination recognizer 182 acquires the destination information about the set destination. The acquired destination information is appropriately stored in the memory 170.

If the user requests to acquire point information about a point of the destination in the step of inputting the destination by operating the terminal input section 130, the user operates the terminal input section 130 so as to request the retrieval information of the point following the instructions on the screen displayed on the terminal display 140. In response to the retrieval request for the retrieval information of the point, the processor 180 makes the information retriever 189 hierarchically retrieve the retrieval information about the destination from the mesh information at the lower layers for each area, typically using the map information MP and acquire the retrieval information associated with the point of the destination from the storage 160. Then, the processor 180 controls the terminal display 140 to display the acquired retrieval information.

If the retrieval information requires to display map information of a predetermined area containing the destination or if the user who has recognized the retrieval information operates the terminal input section 130 to display a predetermined area, the processor 180 appropriately controls the terminal display 140 to display the display mesh information VMx for the corresponding area. After the desired map information is displayed on the terminal display 140 in this way, the user identifies the destination by appropriately specifying the point of the destination with the input operation at the terminal input section 130, for example, by moving the cursor displayed on the map on the screen. When the point information is specified in this way, the destination recognizer 182 of the processor 180 recognizes the point information of the destination as the destination information and stores it in the memory 170.

The processor 180 controls the terminal display 140 to display a screen for prompting the user to input the settings, i.e., criteria for the travel route search. When the user inputs the settings by operating the terminal input section 130 following the instruction on the displayed screen, the processor 180 acquires the setting information about the settings that have been input (Step S204). The acquired setting information is appropriately stored in the memory 170.

Thereafter, the route processor 188 of the processor 180 acquires the setting information stored in the memory 170 and determines whether or not the acquired setting information contains the congestion-prediction request information (Step S205).

If the route processor 188 of the processor 180 determines in the Step S205 that the congestion-prediction request information is not contained, the congestion-status recognizer 187 acquires the VICS data output from the VICS receiver 120. Then, the processor 180 generates current-congestion information of an area containing the current position and the destination based on the acquired VICS data. The generated current-congestion information is appropriately stored in the memory 170.

Then, the route processor 188 of the processor 180 acquires the current-position information, the destination information, the setting information and the current-congestion information from the memory 170. Based on the acquired various information, it performs a route search processing to search for the travel route from the current position of the vehicle to the destination, using the route-search map information and the matching data MM contained in the map information stored in the storage 160 (Step S206).

For example, when searching for a major street of which data is stored and managed in the route-search map information, the route is searched using the route-search map information. On the other hand, when searching for a minor street of which data is not stored in the route-search map information, the route from a minor street to a major street is searched using the matching data MM. While the route is searched using the matching data MM, the coordinate matching section 186 determines whether a plurality of nodes N indicate the identical point to recognize the road arrangement based on the relations between links L.

The route processor 188 detects a plurality of travel routes and selects some of the travel routes based on the acquired setting information and the current-congestion information to generate the travel route information about, for instance, five candidate travel routes that meet the requirements of the user. The route processor 188 estimates the required time to arrive at the destination for the respective travel routes to generate required-time information. Then, the display controller 184 makes the terminal display 140 display the computed travel route information about the five candidates as well as a screen for prompting the user to select any one of them. The user selects and inputs the travel route information about any one of the routes, and thus the travel route is set.

If, on the other hand, the route processor 188 determines in the Step S205 that the congestion-prediction request information is contained, the processor 180 acquires the time information from the timer 191 and recognizes the current date based on the acquired time information. Then, it acquires the calendar template 20 from the memory 170, and then retrieves and recognizes the classification ID number of the recognized date based on the acquired calendar template 20 (Step S207). It also acquires the current-position information and the destination information stored in the memory 170 and recognizes the current position and the destination. Then, the congestion-status recognizer 187 retrieves and acquires the time-series data 12i corresponding to the recognized classification ID number and containing the current position and the destination from the congestion-prediction table 10 stored in the storage 160 (Step S208).

Thereafter, the processor 180 performs the processing of the Step S206. More specifically, the processor 180 generates current-congestion information at the congestion-status recognizer 187 and appropriately stores it in the memory 170. Then, the route processor 188 of the processor 180 acquires the current-position information, the destination information and the setting information from the memory 170. Based on the acquired various information, the route processor 188 detects a plurality of travel routes and selects some of the travel routes on the basis of the acquired setting information to generate candidate travel route information about a plurality of candidate travel routes that meet the requirements of the user.

Thereafter, the congestion-status recognizer 187 of the processor 180 acquires the current-congestion information from the memory 170 and the current time and day from the timer 191. Then, based on the acquired current-congestion information and the current time and day, the congestion-status recognizer 187 estimates the expected arrival time to arrive at a desired spot on the respective candidate travel routes contained in the candidate travel route information generated by the route processor 188. Based on the expected arrival time information and the candidate travel route information, the congestion-status recognizer 187 retrieves and acquires a record containing the congestion-zone information 131 including the desired spot on the candidate travel route from the prediction information correction-master 13 stored in the storage 160. The congestion-status recognizer 187 generates congestion-prediction information having the acquired record.

Based on the current-congestion information and the congestion-prediction information, the route processor 188 of the processor 180 refines the selection of the candidate travel routes contained in the candidate travel route information to generate travel route information about, for instance, five candidate travel routes that meet the requirements of the user. The route processor 188 estimates the required time to arrive at the destination for the respective travel routes to generate required-time information. Then, the display controller 184 makes the terminal display 140 display the computed travel route information about the five candidates as well as a screen for prompting the user to select any one of them. The user selects and inputs the travel route information about any one of the routes, and thus the travel route is set.

Thereafter, the processor 180 acquires the matching data MM from the storage 160. Then, the coordinate matching section 186 performs a coordinate matching processing on the acquired matching data MM (Step S209) for recognizing the arrangement of roads, or the connection of roads, and the memory 170 stores it. Then, under the control of the display controller 184 of the processor 180, the terminal display 140 superimposes an icon indicating the current position of the vehicle on the basis of the current-position information as well as the travel route information about the travel route selected by the user, the congestion-prediction information, the accuracy-level information 135, the required-time information and the current-congestion information on the acquired map information, and the sound output section 150 appropriately outputs sounds for navigating the user (Step S210).

Assume here that: the processing of the Steps S201 through S210 are performed; no congestion is currently present on the roads connecting a current position S1 and a destination G with the shortest distance; and no congestion is predicted at an arbitrary spot on the travel route to the destination G. In such case, as in a navigation display-screen 30A shown in Fig. 12A, a travel route K1 is superimposed on roads R11, R12 and R13 connecting the current position S 1 and the destination G with the shortest distance based on the travel route information, and required-time marks Nt are respectively superimposed near the current position S1 and near the destination G based on the required-time information. The image shown in Fig. 12A is displayed also in the case where the processing of the Steps S201 through S206 and S209 are performed and no congestion is currently present on the roads connecting the current position S1 and the destination G with the shortest distance. The required-time mark Nt as shown in Fig. 12A indicates that the required time to the destination G is one hour and thirty minutes.

Subsequently, the processor 180 recognizes the travel progress of the vehicle based on the data output from the speed sensor, the azimuth sensor and the acceleration sensor of the sensor 110 and the GPS data output from the GPS receiver. Then, the guidance notifier 183 of the processor 180 performs the processing of the Step S210. Specifically, it notifies the guidance information for guiding the travel of the vehicle in visual or audio form on the basis of the recognized travel progress and the route guidance information contained in the travel route information.

More specifically, the display controller 184 of the processor 180 interconnects the nodes N in the matching mesh information MMx acquired from the storage 160 with a polyline and performs polyline processing on the basis of the arrangement of roads described in the link string block information of the matching data MM so as to display the roads in the area of the matching mesh information MMx containing the travel route on the terminal display 140. Then, under the control of the display controller 184, the terminal display 140 superimposes the name information VMxA and the background information VMxC that are miscellaneous element data about the elements of the map excluding roads in the area corresponding to the matching mesh information MMx of the display mesh information VMx acquired from the storage 160. Then, the current position is superimposed on the displayed map.

In the step of superimposing the current position, the map matching processing is performed on the basis of the matching data MM to prevent an indicator representing the current-position information of the vehicle from being located off the displayed road. Namely, the processor 180 appropriately corrects the current-position information to locate the current position to be displayed on the matching data MM for the travel route. Thus the current position is displayed on the link string connecting links L. In this way, the current position is superimposed on the map for providing the navigation. When the current position reaches the predetermined position, guidance on the travel direction and the like are provided in visual or audio form. While the coordinate matching processing is performed at the time of acquiring the matching data MM in the Step S209 in the above description, the coordinate matching processing may alternatively be performed at the time of or before performing the map matching processing.

When the terminal input section 130 is operated to display a map of other areas, the map will be displayed based on the display mesh information VMx acquired from the storage 160 as in the case of the display operation based on the retrieval.

While the vehicle travels, the congestion-status recognizer 187 of the processor 180 acquires the VICS data about congestion, traffic accidents, constructions, traffic controls and weather information. Then, if travel status of the vehicle might be affected or a route change might be required according to the VICS data and the weather information acquired by the congestion-status recognizer 187, the processor 180 performs the processing for travel route search again. The guidance notifier 183 of the processor 180 provides a guidance or notification about the affection.

Then, assume that the processing of the Step S201 through the Step S209 are performed and the congestion-status recognizer 187 recognizes that congestion is present on the road R12 and predicts that no congestion will arise at an arbitrary position on the travel route to the destination G. In such case, as in a navigation display-screen 30B shown in Fig. 12B, a travel route K2 is superimposed on the roads R11, R14 and R15 based on the travel route information; the required-time marks Nt are respectively superimposed near a current position S2 and near the destination G based on the required-time information; and a current-congestion mark Jg is superimposed near the road R12 based on the current-congestion information. The required time to arrive at the destination G is one hour, which is displayed as "1:00". The image shown in Fig. 12B is displayed also in the case where the processing of the Steps S201 through S206 and S209 are performed and it is recognized that congestion is currently present on the road R12.

Then, assume that, while the vehicle travels, the processing of the Step S201 through the Step S209 are performed and the congestion-status recognizer 187 recognizes that the congestion on the road R12 is not yet sorted out and predicts that congestion will arise on the road R13 before arriving at the destination G. In such case, as in a navigation display-screen 30C shown in Fig. 12C, a travel route K3 is superimposed on the roads R14, R16, R17 and R18 based on the travel route information; a congestion-prediction mark Jy is superimposed near the road R13 based on the respective information 131 to 134 of the record included in the congestion-prediction information; an accuracy-level information Tc is superimposed near the congestion-prediction mark Jy based on the accuracy-level information 135 of the record; the required-time marks Nt are respectively superimposed near a current position S3 and near the destination G based on the required-time information; and the current-congestion mark Jg is superimposed near the road R12 based on the current-congestion information. The required time to arrive at the destination G is forty minutes, which is displayed as "0:40"

The prediction information corrector 192 appropriately determines whether or not the current position of the vehicle recognized by the current-position recognizer 181 and the zone indicated by the congestion-zone information 131 of the congestion-prediction information are overlapped. If the prediction information corrector 192 determines that the current position and the zone are not overlapped, it does not perform any particular processing. If, on the other hand, the prediction information corrector 192 determines that the current position and the zone are overlapped, or if the vehicle moves on the road R13 with the congestion-prediction mark Jy, it controls the terminal display 140 and the sound output section 150 to prompt the user to input the accuracy information. Then, when the user inputs the accuracy information by operating the terminal input section 130 following the instructions on the displayed screen and the audio instructions, the prediction information corrector 192 acquires the input accuracy information. The prediction information corrector 192 determines whether or not the acquired accuracy information describes that the information about the congestion at the current position of the vehicle displayed on the terminal display 140 substantially matches with the actual traffic conditions, i.e., the acquired accuracy information describes that the user has determined that the prediction information about the congestion is accurate (Step S211).

In the Step S211, if the prediction information corrector 192 determines that the accuracy information describes that the information about the congestion substantially matches with the actual traffic conditions, it recognizes whether or not the user has performed input operation demanding to continue the navigation operation (Step S212). If the prediction information corrector 192 recognizes that the user has performed the input operation demanding to continue the navigation in the Step S212, the operation returns to the Step S210. If, on the other hand, the prediction information corrector 192 recognizes that the user has performed the input operation demanding to end the navigation, it ends the processing for travel route search.

If, on the other hand, the prediction information corrector 192 determines that the accuracy information describes that the information about the congestion does not match with the actual traffic conditions in the Step S211, it corrects the record of the congestion-prediction information (Step S213). More specifically, the prediction information corrector 192 reduces the value of the accuracy-level information 135 by 1 and increases the value of the user-correction information 136 by 1.

Then, the prediction information corrector 192 updates the prediction information correction-master 13 stored in the storage 160 (Step S214). Specifically, the prediction information corrector 192 retrieves the record used for generating the congestion-prediction information from the prediction information correction-master 13 stored in the storage 160. The prediction information corrector 192 updates the retrieved record to the record updated in the Step S213. Thereafter, the processing of the Step S212 is performed.

In the processing of the Step S213, for example, flag information is added to the congestion-prediction information with the accuracy level corrected. In the Step S210 of performing the navigation again, the navigation is performed without displaying the images superimposed on the map information in the corrected congestion-prediction information. For setting the travel route again or for the reroute search, the flag information is removed and the congestion-prediction information with the corrected accuracy-level is notified.

### [Advantages of First Embodiment]

As described earlier, in the above first embodiment, the congestion information about the traffic conditions for the vehicle and the accuracy-level information 135 about the reliability of the traffic information such as the congestion-prediction information are superimposed on the map information together with the traffic information and thus notified to the user. Therefore, since the traffic conditions are notified together with the reliability thereof, the user can be informed of more appropriate traffic conditions. Accordingly, the user can appropriately drive the vehicle, and the usability is improved, thereby easily expanding the use.

The traffic conditions are displayed on the map information, and the surrounding area map information 141 with the accuracy-level information 135 respectively corresponding to the traffic conditions superimposed is displayed on the terminal display 140 for the notification. Therefore, the user can easily recognize the reliability of the traffic conditions, and more appropriate navigation can be obtained. Since the sound output section 150 notifies the accuracy-level information 135, the user can be appropriately informed of the traffic conditions.

When the user performs a predetermined input operation at the terminal input section 130 to correct the notified traffic conditions based on the actual traffic conditions, the traffic information including the corrected traffic conditions is displayed. For instance, as described earlier, in the case where the traffic conditions are notified as congested but not congested or crowded in fact, the correction is made based on the fact to not display the congested status or to display the crowded status. In this way, the traffic conditions can appropriately notified. In addition, since the accuracy-level information 135 is changed based on the corrected content, the reliability which will be displayed next time is notified reflecting the actual traffic conditions and the more appropriate traffic conditions can be obtained.

The accuracy-level information 135 is so corrected to have lower reliability as the frequency of the correction increases. Therefore, the appropriate reliability of the traffic condition can be notified.

The display controller 184 displays accuracy-level marks Tc in different forms according to the difference of the accuracy-level information 135. For example, in the case that the accuracy-level information 135 has a low value, the congestion-prediction mark Jy and the accuracy-level mark Tc are not displayed, and thus the unnecessary information is not notified. Therefore, it is possible to display only the reliable information but the unreliable information. Accordingly, the navigation device 100 notifies only the reliable information to the user and hence the appropriate information about the traffic conditions can be notified. The different colors can be used on the screen according to the difference of the accuracy-level information 135. With this configuration, user can check the congestion-prediction information and the accuracy-level thereof right away when the user look at the terminal display 140, thereby improving the usability.

The navigation device 100 has the prediction information corrector 192 that recognizes the congestion-prediction information recognized by the congestion-status recognizer 187 to determine if the actual traffic conditions substantially match with the traffic conditions in the congestion-prediction information and then, if not, lowers the accuracy-level information 135. Therefore, if the actual traffic conditions do not substantially match with the congestion-prediction information, the accuracy-level information 135 is lowered and thus the reliability can be lowered. Accordingly, the navigation device 100 can acquire the appropriately corrected information only with the simple data processing using the prediction information corrector 192 and notify the congestion-prediction information, thereby simplifying the configuration for providing the appropriate information about the traffic conditions.

The prediction information corrector 192 recognizes the information describing whether the congestion-prediction information input by the user matches with the actual traffic conditions and, based on this information, corrects the congestion-prediction information. Therefore, the prediction information corrector 192 can correct the congestion information correction information based on the user's determination. Accordingly, the navigation device 100 can correct the accuracy-level information 135 for each user to provide the information about the traffic conditions suitable for each user.

The prediction information correction-master 13 has a table structure where various information of the time-series data 12i as the traffic information and information about the reliability of the various information are formed as a single record and a plurality of such records are stored. Therefore, the accuracy-level information 135 corresponding to each traffic condition can be notified with simple data structure. Further, in the single data, the user-correction information 136 is associated therewith. Accordingly, with the simple data structure, the correction for reflecting the actual traffic conditions can be made by the user. Therefore, the traffic conditions can be appropriately notified with the simple configuration, and the construction of the data structure and the maintenance thereof can be performed with ease, thereby facilitating the building of the navigation device 100. The prediction information correction-master 13, with which the accuracy-level information 135 of the time-series data 12i and the user-correction information 136 are associated, is provided separately from the congestion-prediction table 10. This further facilitates the construction and the maintenance of the data.

The congestion-prediction information is generated using the congestion-prediction table 10 containing the statistical traffic information obtained by statistically processing traffic conditions in the past. Therefore, the processing load is lower than that for predicting the congestion using a special simulation program, and hence the congestion prediction for every predetermined time can be quickly computed. In other words, the transition of the congestion can be quickly notified based on the congestion prediction, thereby easily providing the effective navigation.

The calendar template 20 is provided so that the congestion-prediction table 10 is associated with the dates in the calendar template 20. In other words, the calendar template 20 has a table structure where the changeable classification ID number corresponding to the date-classification ID 11 contained in the congestion-prediction table 10 is associated with the date information about the date of the calendar. Accordingly, the congestion can be properly predicted using the congestion-prediction table 10 containing the past data, thereby providing effective navigation. The date of the calendar template 20 is associated with the changeable classification ID number related to the congestion-prediction table. Therefore, if the predicted traffic conditions and the actual traffic conditions have discrepancies, it is only necessary to change the classification ID number corresponding to the time-series data contained in the congestion-prediction table corresponding to the actual situation, thereby properly predicting the congestion.

### [Second Embodiment]

Now, a second embodiment of the present invention will be described with reference to the attached drawings. A communication navigation system of this embodiment is an example of a traffic-condition notifying system of the present invention, and so designed to navigate a mobile body (e.g. a vehicle) for the travel or drive thereof. As in the case of the first embodiment, the traffic-condition notifying system of the present invention is not necessarily designed to navigate a vehicle for the drive thereof, but may be so designed to notify traffic information regarding any types of mobile body.

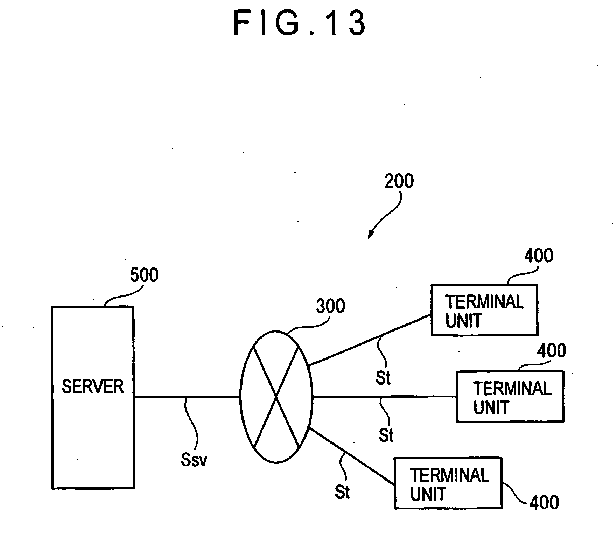

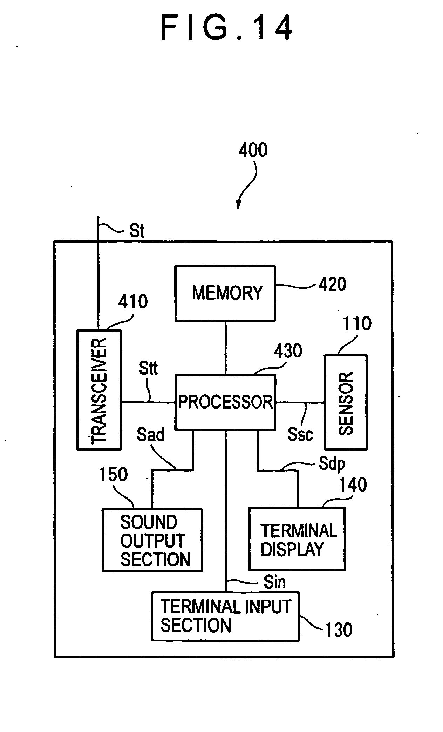

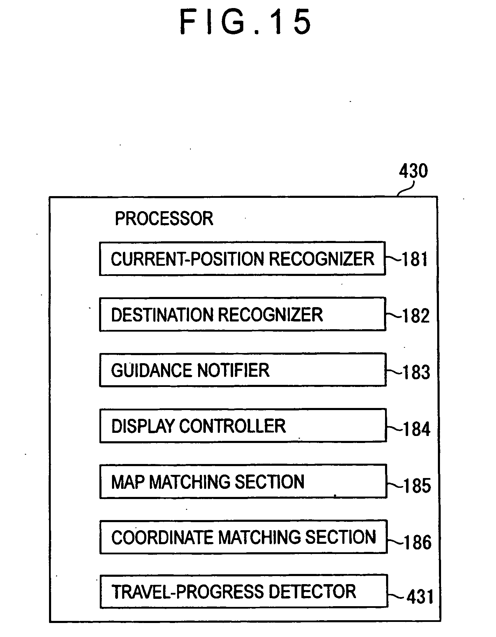

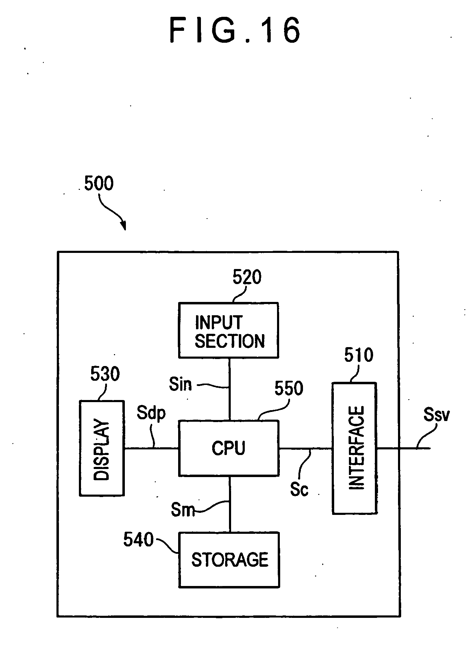

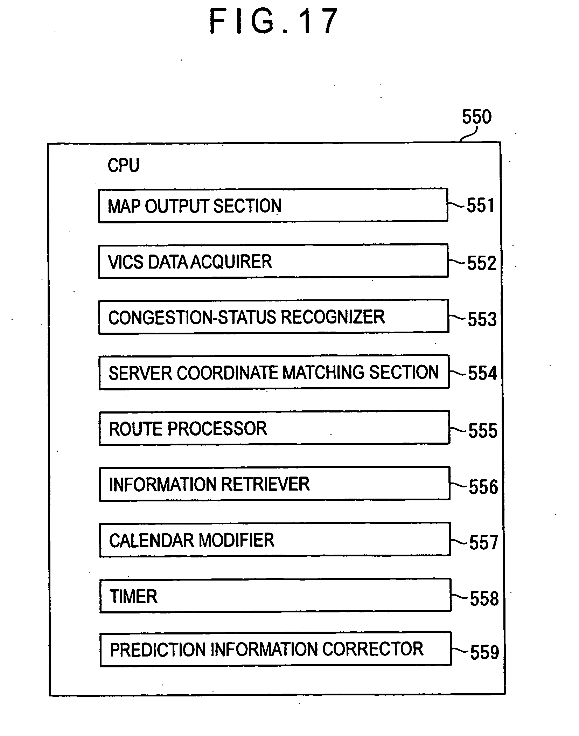

Fig. 13 is a schematic block diagram showing a configuration of the navigation system according to the present embodiment. Fig. 14 is a schematic block diagram showing a configuration of a terminal unit. Fig. 15 is a schematic block diagram showing a configuration of a processor of the terminal unit. Fig. 16 is a schematic block diagram showing a configuration of a server. Fig. 17 is a schematic block diagram showing a CPU of the server. The components same as those in the first embodiment are denoted respectively by the same reference symbols and will not be described any further.

### [Configuration of Navigation System]

Referring to Fig. 13, the reference numeral 200 denotes the communication navigation system (traffic-condition notifying system). The navigation system 200 notifies guidance on a travel along with a travel progress of a mobile body (e.g. a vehicle). The mobile body is not limited to vehicles, but includes any types of mobile body such as aircrafts and ships. The navigation system 200 has a network 300, a terminal unit 400 that operates as a traffic-condition notifying device, and a server 500.

The network 300 is connected to the terminal unit 400 and the server 500. The network 300 interconnects the terminal unit 400 and the server 500 to enable the communication therebetween. The network 300 may be Internet based on a general-purpose protocol such as TCP/IP protocol, an intranet, a LAN (Local Area Network), a communication network and a broadcasting network that have a plurality of base stations capable of communicating by way of a radio medium, or the radio medium itself that enables direct communication between the terminal unit 400 and the server 500. The radio medium may be any one of electric waves, light beams, acoustic waves and electromagnetic waves.

Like the navigation device 100 of the first embodiment, the terminal unit 400 may be, for example, an in-vehicle unit installed in a vehicle as a mobile body, a portable unit, a PDA (Personal Digital Assistant), a mobile phone, a PHS (Personal Handyphone System) or a portable personal computer. The terminal unit 400 acquires map information delivered by the server 500 over the network 300. On the basis of the map information, the terminal unit 400 searches for and displays information about a current position and a destination, a route to the destination, predetermined shops nearby, and information about services offered by the shops. As shown in Fig. 14, the terminal unit 400 includes a transceiver 410 that operates as a terminal communicator, a sensor 110, a terminal input section 130, a terminal display 140, a sound output section 150, a memory 420, a processor 430 and so on.

The transceiver 410 is connected to the server 500 over the network 300, and also connected to the processor 430. The transceiver 410 can receive a terminal signal St from the server 500 over the network 300. When acquiring the terminal signal St, the transceiver 410 performs a preset input interface processing so as to output the terminal signal St as a processing terminal signal Stt to the processor 430. The transceiver 410 can also input the processing terminal signal Stt from the processor 430. When acquiring the processing terminal signal Stt to be input, the transceiver 410 performs a preset output interface processing so as to send the processing terminal signal Stt as the terminal signal St to the server 500 over the network 300.

The sensor 110 detects the travel progress of the vehicle, or the current position and the driving status, and outputs it as a predetermined signal Ssc to the processor 430.

The terminal input section 130 has various operation buttons and operation knobs (not shown) to be used for input operations. The operation buttons and the operation knobs are used to input, for example, the settings for the operations of the terminal unit 400. More specifically, they may be used: to issue an instruction for executing a communication operation as an communication request information for acquiring information over the network 300; to set the type of information to be acquired and acquiring criteria; to set a destination; to retrieve information; and to display the driving status (travel progress) of the vehicle. When the settings are input, the terminal input section 130 outputs a predetermined signal Sin to the processor 430 so as to apply the settings.

The terminal display 140, under the control of the processor 430, displays a signal Sdp representing an image data sent from the processor 430. The image data may be an image data of the map information and the retrieval information sent from the server 500.

The sound output section 150, under the control of the processor 430, outputs and notifies various signals Sad as sounds from an audio section. The various signals Sad represent the sound data etc. sent from the processor 430.

The memory 420 appropriately stores various information acquired over the network 300, the settings that are input by the terminal input section 130, a music data, an image data and the like. The memory 420 also stores various programs that run on the OS (Operating System) controlling the whole operation of the terminal unit 400. The memory 420 may include drives or drivers for readably storing a data on a storage medium such as a HD (Hard Disk) or an optical disk.

The processor 430 has various input/output ports (not shown) including a communication port connected to the transceiver 410, a GPS receiving port connected to a GPS receiver of the sensor 110, sensor ports respectively connected to various sensors of the sensor 110, a key input port connected to the terminal input section 130, a display control port connected to the terminal display 140, a sound control port connected to the sound output section 150 and a storage port connected to the memory 420. As shown in Fig. 14, the processor 430 has various programs such as a current-position recognizer 181, a destination recognizer 182, a guidance notifier 183, a display controller 184, a map matching section 185, a coordinate matching section 186, a travel-progress detector 431 that operates as a travel-progress recognizer and so on.

The current-position recognizer 181 recognizes the current position of the vehicle. Various information acquired by the current-position recognizer 181 are appropriately stored in the memory 420.

The destination recognizer 182 typically acquires the destination information about the destination set by the input operation at the terminal input section 130 and recognizes the position of the destination. Such destination information recognized by the destination recognizer 182 is appropriately stored in the memory 420.

The guidance notifier 183 provides guidance stored in the memory 420 on the basis of travel route information and feature guidance information acquired in advance according to the driving status. The guidance is related to the travel of the vehicle, which may be the congestion-prediction information containing the contents for assisting the drive of the vehicle and the information about the accuracy level thereof.

The display controller 184 controls the terminal display 140 and displays various information such as the congestion-prediction mark Jy and the accuracy-level mark Tc on the terminal display 140.

The map matching section 185 performs the map matching processing for displaying the current position recognized by the current-position recognizer 181 based on the map information obtained from the server 500.

The coordinate matching section 186 performs the coordinate matching processing for determining whether or not point information about nodes N contained in the matching data MM of the map information acquired from the server 500 indicate an identical point.

The travel-progress detector 431 detects the travel-progress information (the actual traffic conditions) to transmit it to the server 500. More specifically, the travel-progress detector 431 recognizes the information detected by the sensor 110 such as average speed of the vehicle per unit of time, the moving direction, and the coordinates of the current position recognized by the current-position recognizer 181, and creates the travel-progress information. The travel-progress detector 431 transmits the travel-progress information from the transceiver 410 to the server 500 via the network 300. While the travel-progress detector 431 detects the average speed per unit of time in the above description, it may detect time required to pass through a predetermined zone, average speed in a predetermined or the like.

The server 500 can communicate with the terminal unit 400 over the network 300. The server 500 is capable of acquiring various information from other servers (not shown) of various government offices such as Meteorological Agency and National Police Agency, private organizations, VICS and business enterprises over the network 300. The information to be acquired may be travel information for the vehicle, i.e., various travel related information used during the travel of the vehicle such as weather information, VICS data including congestion, traffic accidents, constructions, traffic controls, and shop information about various shops including gasoline stations and restaurants etc. As shown in Fig. 16, the server 500 includes an interface 510, an input section 520, a display 530, a storage 540, a CPU (Central Processing Unit) 550 and so on.

The interface 510 performs a preset input interface processing over a server signal Ssv input via the network 300 so as to output the server signal Ssv as a processing server signal Sc to the CPU 550. When the processing server signal Sc to be sent to the terminal unit 400 is input in the interface 510 from the CPU 550, the interface 510 performs preset output interface processing over the input processing server signal Sc so as to output the processing server signal Sc as a server signal Ssv to the terminal unit 400 over the network 300. Note that the server signal Ssv can be appropriately output only to a predetermined terminal unit 400 on the basis of the information described in the processing server signal Sc.

Like the terminal input section 130, the input section 520, which may be a keyboard, a mouse or the like, has various operation buttons and operation knobs (not shown) to be used for input operations. The operation buttons and the operation knobs are used: to input the settings for operations of the server 500; to set information to be stored in the storage 540; and to update the information stored in the storage 540. When the settings are input, the input section 520 outputs a signal Sin corresponding to the setting to the CPU 550 so as to apply the settings. In place of the operation buttons and the operation knobs, the input section 520 may include a touch panel that may be arranged at the display 530 for input operations and a sound input section for the input operations thereof as long as various settings can be input.

The display 530, just like the terminal display 140, displays a signal Sdp representing an image data sent from the CPU 550 under the control of the CPU 550. The image data may be those acquired from the storage 540 and those acquired from external servers over the network 300.

The storage 540 readably stores various information received from the terminal unit 400 and external servers such as the map information as shown in Figs. 2 and 3, the congestion-prediction table 10 as shown in Fig. 4, and the prediction information correction-master 13 as shown in Fig. 5. The storage 540 also readably stores the calendar template 20 associated with the terminal units 400 connected to the server 500 over the network 300 as shown in Fig. 6. More specifically, although not shown, the storage 540 has a various information storage area for storing various information, a map information storage area that operates as a map information storage for storing map information, a congestion-prediction table storage area that operates as a statistical traffic information storage for storing the congestion-prediction table 10, a prediction information correction-master storage area for storing the prediction information correction-master 13, and a calendar storage area for storing the calendar template 20.

While the storage 540 has the above-mentioned five storage areas in the above description, the storage 540 may not have any of the above-mentioned storage areas, or may have additional storage areas. The storage 540 may include drives or drivers for readably storing a data on storage medium such as a HD (Hard Disk), a DVD (Digital Versatile Disk), an optical disks and a memory card. Information to be stored may include, for example, information input by the input operation at the input section 520, and the contents of the information stored with the input operation can be appropriately updated. The storage 540 also stores information such as various programs that run on an OS (Operating System) controlling the whole operation of the server 500 and the navigation system 200.

The storage 540 typically stores the retrieval information for acquiring information of a predetermined point in the map information. More specifically, the retrieval information provided upon the retrieval request from the terminal unit 400 includes various information about contents and guidance such as names of states, cities, regions and points, which are units used to gradually divide the map information into smaller areas, as well as various information about shops as points. The retrieval information is structured in a tree structure table so that item information are hierarchically associated with each other.

The storage 540 stores personal information about users who use the navigation system 200 with the terminal unit 400. The personal information may include a name and an address, a user ID number and a password assigned to each user, a type of the terminal unit 400 for the use of the navigation system 200, and an address number of the terminal unit 400 used for communicating with the terminal unit 400. Furthermore, the storage 540 stores various information used for performing the navigation processing in a manner readable by the CPU 550.

As shown in Fig. 17, the CPU 550 has various programs stored in the storage 540 such as a map output section 551, a VICS data acquirer 552 that operates as a traffic information acquirer, a congestion-status recognizer 553 that operates as a traffic information acquirer, an accuracy-level information acquirer, a travel-progress recognizer, a request information acquirer, a traffic-condition recognizer and a corrected-content information acquirer, a server coordinate matching section 554, a route processor 555 that operates as the travel-progress recognizer, an information retriever 556, a calendar modifier 557, a timer 558, a prediction information corrector 559 that operates as a corrected-content information acquirer and an accuracy-level changer and so on.

The map output section 551 responds to the input of the processing server signal Sc to refer to the information requesting a delivery of the information about the map information contained in the processing server signal Sc, and retrieves the requested information from the map information stored in the storage 540, e.g., the display data VM and matching data MM corresponding to a predetermined area to read it out as the memory signal Sm. The map output section 551 appropriately converts the read memory signal Sm into a processing server signal Sc, outputs the processing server signal Sc to predetermined or all terminal units 400 via the interface 510 and the network 300 on the basis of the processing server signal Sc, and delivers the requested information contained in the map information.

The VICS data acquirer 552, just like the VICS receiver 120 of the first embodiment, responds to the input of the processing server signal Sc and refers to the information about the request for the route search contained in the processing server signal Sc so as to acquire the VICS data from the VICS (not shown).

The congestion-status recognizer 553 responds to the input of the processing server signal Sc and refers to the information about the request for the route search contained in the processing server signal Sc so as to generate current-congestion information as the memory signal Sm based on the VICS data acquired by the VICS data acquirer 552. Also, the congestion-status recognizer 553, just like the congestion-status recognizer 187, responds to the input of the processing server signal Sc and refers to the information about the request for the travel route search based on the congestion information and the congestion prediction contained in the processing server signal Sc so as to generate congestion-prediction information as the memory signal Sm. Then, the congestion-status recognizer 553 appropriately converts the generated memory signal Sm into a processing server signal Sc, outputs the processing server signal Sc to a predetermined or all terminal units 400 via the interface 510 and the network 300 on the basis of the processing server signal Sc, and notifies the current congestion status and the predicted congestion that might arise before arriving at the destination.

The server coordinate matching section 554, just like the above-described coordinate matching section 186 of terminal unit 400, performs the coordinate matching processing for determining whether or not point information about nodes N contained in the matching data MM of the map information indicate an identical point.

The route processor 555, just like the route processor 188 of the first embodiment, responds to the input of the processing server signal Sc and refers to the information about the request for the route search contained in the processing server signal Sc so as to generate travel route information and required-time information as the memory signal Sm. Then, the route processor 555 appropriately converts the generated memory signal Sme into a processing server signal Sc, outputs the processing server signal Sc to a predetermined or all terminal units 400 via the interface 510 and the network 300 on the basis of the processing server signal Sc, and notifies the travel route and the required time.

The information retriever 556, just like the information retriever 189 of the first embodiment, responds to the input of the processing server signal Sc and refers to the information about the retrieval request for the retrieval information contained in the processing server signal Sc so as to hierarchically retrieve the retrieval information stored in the storage 540 typically on the basis of item information and read it as the memory signal Sm. Then, the information retriever 556 appropriately converts the generated memory signal Sm into a processing server signal Sc, outputs the processing server signal Sc to a predetermined or all terminal units 400 via the interface 510 and the network 300 on the basis of the processing server signal Sc, and delivers the retrieval information.

The calendar modifier 557 responds to the input of the processing server signal Sc and recognizes information contained in the processing server signal Sc, which may be calendar-modification request information requesting the modification of the calendar template 20 and terminal-specific information such as ID numbers for identifying a terminal unit 400 that generated the calendar-modification request information. Then, the calendar modifier 557, just like the calendar modifier 190 of the first embodiment, appropriately updates the calendar template 20 stored in the storage 540 and associated with the terminal unit 400 identified by the terminal-specific information stored in the storage 540.

The timer 558 recognizes the current time typically based on the pulse of an internal clock. Then, the timer 558 appropriately outputs time information about the recognized current time.

The prediction information corrector 559, as in the case of the first embodiment, appropriately updates the prediction information correction-master 13 stored in the storage 540 on the basis of accuracy information set by the user. The prediction information corrector 559 responds to the input of the processing server signal Sc and recognizes the travel-progress information contained in the processing server signal Sc. The prediction information corrector 559 recognizes the actual traffic conditions and the current position of the vehicle based on, for instance, the average speed, the moving direction and the coordinates of the current position contained in travel-progress information. Further, the prediction information corrector 559 compares the actual traffic conditions and the congestion-prediction information generated by the congestion-status recognizer 553 and updates the congestion-prediction information based on the comparison result. More specifically, the prediction information corrector 559 appropriately determines whether or not the current position of the vehicle recognized based on the travel-progress information and the zone indicated by the congestion-zone information 131 of the congestion-prediction information recognized by the congestion-status recognizer 553 are overlapped. If the current position of the vehicle and the zone indicated by the congestion-zone information 131 are not overlapped, the prediction information corrector 559 does not perform processing. If, on the other hand, the current position of the vehicle and the zone indicated by the congestion-zone information 131 in the congestion-prediction information generated by the congestion-status recognizer 553 are overlapped, the traffic conditions of the current position of the vehicle are determined.

For example, the prediction information corrector 559 determines the traffic conditions of the current position of the vehicle as "congested" when the average speed contained in the recognized progress-status information is lower than the preset speed; "smooth" when the average speed is higher than the preset speed; and "crowded" when the average speed is substantially the same as the preset speed.

Then, the prediction information corrector 559 determines whether or not the traffic conditions of the current position of the vehicle match with the congestion-level information 134. If the prediction information corrector 559 determines that the traffic conditions of the current position of the vehicle match with the congestion-level information 134, it does not perform any particular processing. If, on the other hand, the prediction information corrector 559 determines that the traffic conditions of the current position of the vehicle do not match with the congestion-level information 134, it reduces the value of the accuracy-level information 135 contained in the congestion-prediction information and increases the value of the user-correction information 136. A predetermined record in the prediction information correction-master 13 stored in the storage 540 is updated based on the corrected congestion-prediction information. In this step, the record to be corrected may be only the records having the accuracy-level information 135 corrected by the prediction information corrector 559.

The CPU 550 responds to the signal Sin input from the input section 520 by the input operation at the input section 520, and appropriately performs computation based on the contents corresponding to the input operation to appropriately generate a signal Sdp. Then the CPU 550 appropriately outputs the generated various signals to the display 530, the interface 510 and the storage 540 and operates them so as to execute the input contents.

### [Operation of Navigation System]

Now, the operation of the navigation system 200 will be described with reference to the attached drawings. The processing that is substantially the same as those of the first embodiment will be described only briefly.

### (Processing for Modifying Calendar Template)

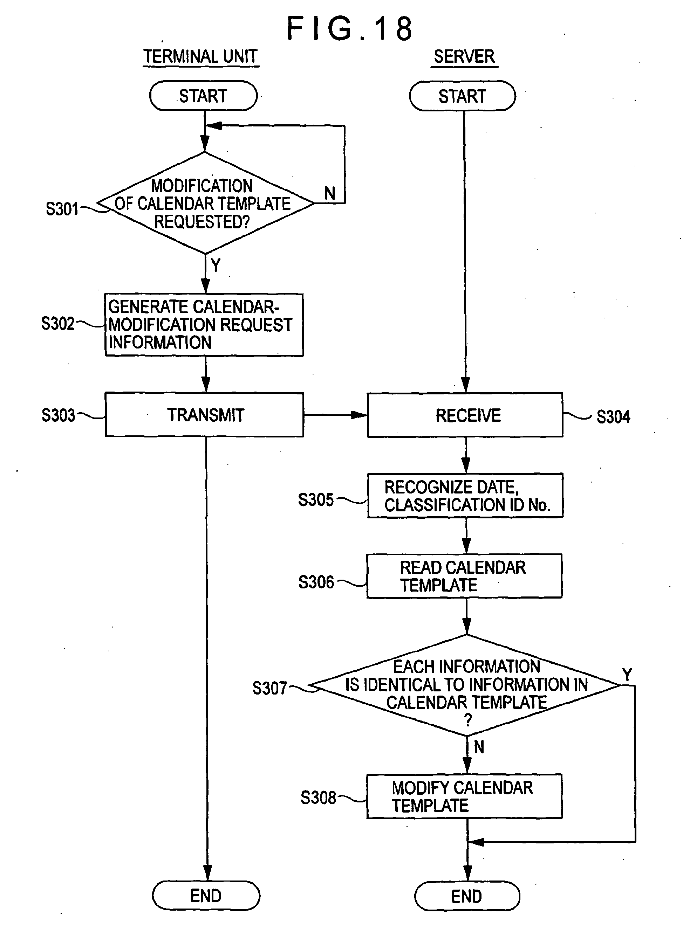

Firstly, the processing for modifying the calendar template 20 as one of the operations of the navigation system 200 will be described with reference to Fig. 18. Described herein is the processing for modifying the calendar template 20 as shown in Fig. 6 stored in the storage 540 of the server 500 based on the information about, for example, a festival scheduled on 5th in City X, that a user have recognized from the radio or TV broadcastings. Fig. 18 is a flowchart showing the processing for modifying a calendar template.

Firstly, the user in the vehicle switches on the terminal unit 400 to supply the power thereto. When the power is supplied, the processor 430 controls the terminal display 140 to display a main menu and a screen for prompting the user to set a specific operation to be executed by the terminal unit 400.

Then, as shown in Fig. 17, the user operates the terminal input section 130 to set a command for modifying the calendar template 20. When the processor 430 recognizes the set command for modifying the calendar template 20 at the calendar modifier 190 (Step S301), it makes the terminal display 140 display a screen for prompting the user to set the date information and event information for modifying the calendar template 20.

When the user sets the date information and the event information by operating the terminal input section 130 following the instructions on the displayed screen, the processor 430 recognizes the set date information and the event information. Then, the processor 430 generates calendar-modification request information containing the recognized date information and event information (Step S302), and the transceiver 410 transmits the generated calendar-modification request information to the server 500 via the network 300. When transmitting the calendar-modification request information, the transceiver 410 also transmits the terminal-specific information for identifying the terminal unit 400 (Step S303).

When the server 500 receives the calendar-modification request information and the terminal-specific information transmitted from the terminal unit 400 (Step S304), the calendar modifier 557 recognizes the date information and the event information contained in the received calendar-modification request information (Step S305). More specifically, the calendar modifier 557 recognizes the date specified according to the date information as 5th, and the classification ID number associated with the event information as "ID4".

Thereafter, the calendar modifier 557 reads out the calendar template 20 associated with the terminal unit 400 that transmitted the calendar-modification request information on the basis of the terminal-specific information received in the Step S304 (Step S306). Then, the calendar modifier 557 determines whether or not the information recognized in the Step S305 is identical to the information contained in the calendar template 20 read in the Step S306 (Step S307).

If the calendar modifier 557 determines in the Step S307 that the information are identical, it ends the processing without modifying the calendar template 20. If, on the other hand, the calendar modifier 557 determines that the information are not identical, it modifies the calendar template 20 on the basis of the various information recognized in the Step S305 (Step S308). More specifically, since the classification ID number of the 5th recognized in the Step S305 is "ID4" and the classification ID number of the 5th recognized based on the calendar template 20 is "ID1", the calendar modifier 557 modifies the classification ID number of the 5th from "ID1" to "ID4" as shown in Fig. 10. Then, the calendar modifier 557 associates the calendar template 20 containing the modified classification ID number with the terminal unit 400 that transmitted the calendar-modification request information to store it in the storage 540, and ends the processing.

### (Processing for Travel Route Search)

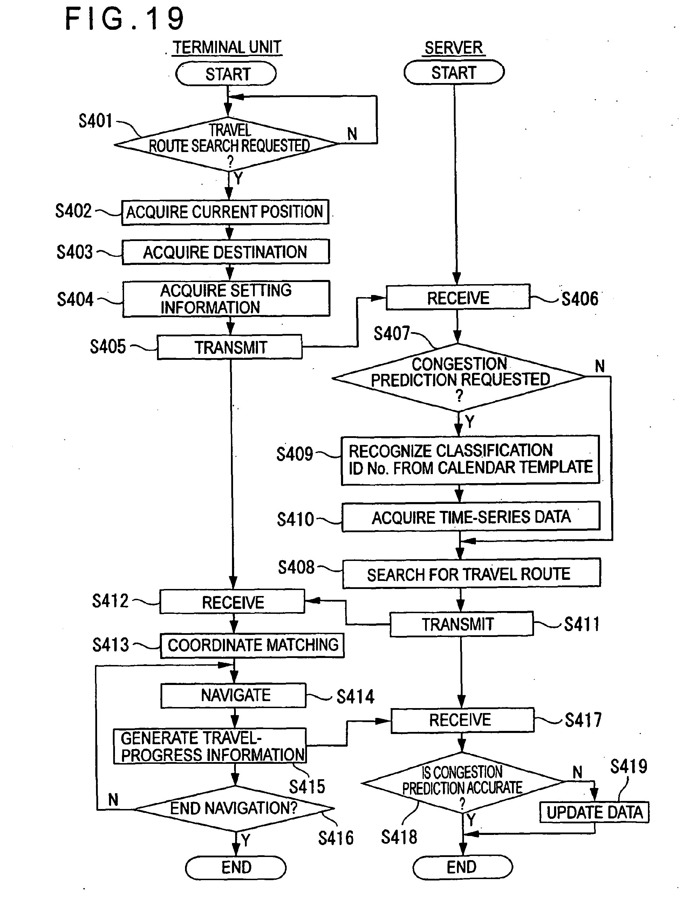

Now, the processing for travel route search as one of operations of the navigation system 200 will be described with reference to Fig. 19. Fig. 19 is a flowchart showing the processing for travel route search.

Firstly as shown in Fig. 19, the user operates the terminal input section 130 to set a command for searching for a travel route. When the processor 430 recognizes the set command for searching for a travel route (Step S401), the processor 430 makes the terminal display 140 display a screen for prompting the user to set various information necessary for travel route search such as the destination, the setting information about the preference for shortest travel distance or shortest travel time and the necessity of congestion prediction.

When the processor 430 recognizes the various information necessary for the travel route search, the current-position recognizer 181 acquires the current-position information about the current position (Step S402) and the destination recognizer 182 recognizes the destination information about the set destination (Step S403). The processor 430 also acquires the setting information about the settings that have been input (Step S404). The acquired current-position information, the destination information and the setting information are appropriately stored in the memory 420.

Thereafter, the processor 430 controls the transceiver 410 to transmit the current-position information, the destination information and the setting information stored in the memory 420 as well as a signal requesting the travel route search to the server 500. When transmitting the various information, the transceiver 410 also transmits the terminal-specific information for identifying the terminal unit 400 (Step S405).

When the server 500 receives the various information transmitted from the terminal unit 400 (Step S406), the route processor 555 of the CPU 550 determines whether or not the received setting information contains a congestion-prediction request information (Step S407).

If the route processor 555 of the CPU 550 determines in the Step S407 that the congestion-prediction request information is not contained, the VICS data acquirer 552 acquires the VICS data. Then, the congestion-status recognizer 553 of the CPU 550 generates current-congestion information of an area containing the current position and the destination based on the acquired VICS data. Thereafter, based on the current-position information, destination information, the setting information and the current-congestion information, the route processor 555 of the CPU 550 executes a route search processing to search for the travel route from the current position of the vehicle to the destination (Step S408).

More specifically, the route processor 555 generates travel route information about, for instance, five candidate travel routes that meet the requirements of the user, using the map information stored in the storage 540. The route processor 555 estimates the required time to arrive at the destination for the respective travel routes to generate required-time information.

If, on the other hand, the route processor 555 determines in the Step S407 that the congestion-prediction request information is contained, the route processor 555 acquires the time information from the timer 558 and recognizes the current date based on the acquired time information. Then, the congestion-status recognizer 553 of the CPU 550 reads out the calendar template 20 associated with the terminal unit 400 that requested the travel route search from the storage 540 on the basis of the terminal-specific information received in the Step S406. Thereafter, the congestion-status recognizer 553 retrieves and recognizes the classification ID number of the recognized date based on the read calendar template 20 (Step S409). Then, it recognizes the current position and the destination based on the current-position information and the destination information received in the Step S406. Then, the congestion-status recognizer 553 retrieves and acquires the time-series data 12i corresponding to the recognized classification ID number and containing the current position and the destination from the congestion-prediction table 10 stored in the storage 540 (Step S410).

Thereafter, the CPU 550 performs the processing of the Step S408. More specifically, the congestion-status recognizer 553 of the CPU 550 generates current-congestion information. Based on the current-position information, destination information, setting information and current-congestion information, the route processor 555 of the CPU 550 detects a plurality of travel routes and selects some of the travel routes on the basis of the acquired setting information to generate candidate travel route information about a plurality of candidate travel routes that meet the requirements of the user.

Then, the congestion-status recognizer 553 of the CPU 550 acquires the current time and day from the timer 558. Then, based on the current-congestion information and the current time and day, the congestion-status recognizer 553 estimates the expected arrival time to arrive at a desired spot on the respective candidate travel routes contained in the candidate travel route information generated by the route processor 555. Then, the congestion-status recognizer 553 predicts the congestion status at the desired spot on the respective candidate travel routes at the expected arrival time on the basis of the time-series data 12i acquired in the Step S410 and generates congestion-prediction information about the predicted congestion status. The congestion-status recognizer 553 retrieves and acquires a record containing the status of the congestion predicted in the congestion-prediction information from the prediction information correction-master 13 stored in the storage 540 to generate congestion-prediction information.

Based on the current-congestion information and the congestion-prediction information, the route processor 555 of the CPU 550 further refined the selection of the candidate travel routes contained in the candidate travel route information to generate travel route information about, for instance, five candidate travel routes that meet the requirements of the user. Then, the route processor 555 generates required-time information for the respective travel routes contained in the travel route information.

After the Step S408, the server 500 controls the interface 510 on the basis of the terminal-specific information received in the Step S406 and appropriately transmits the travel route information, the congestion-prediction information, the required-time information and the current-congestion information obtained as a result of the route search processing to the predetermined terminal unit 400 together with map information (Step S411). It may acquire the matching data MM in advance on the basis of the current-position information. The map information to be transmitted needs to include only the matching mesh information MMx of the matching data MM that contains the nodes N and the links L for the roads of the travel routes, the display mesh information VMx of the display data VM for other areas, the name information VMxA and the background information VMxC in the area corresponding to the matching mesh information MMx.

When the processor 430 of the terminal unit 400 receives the various information (Step S412), it performs the coordinate matching processing for the received matching data MM (Step S413) and recognizes the arrangement of roads, or the connection of roads, which are then appropriately stored in the memory 420. Under the control of the processor 430, the display controller 184 makes the terminal display 140 display the travel route information about, e.g., five candidate travel routes computed by the server 500 and a screen for prompting the user to select any one of them. The user selects and inputs the travel route information about any one of the routes, and thus the travel route is set.

Thereafter, under the control of the display controller 184 of the processor 430, the terminal display 140 superimposes an icon indicating the current position of the vehicle on the basis of the current-position information as well as the travel route information about the travel route selected by the user, the congestion-prediction information, the required-time information and the current-congestion information on the received map information. For example, if the congestion-status recognizer 553 of the server 500 predicts that no congestion is currently present on the roads connecting a current position S1 and a destination G with the shortest distance and no congestion is predicted at an arbitrary spot on the travel route to the destination G, various information is superimposed as shown in Fig. 12A as in the case of the first embodiment. If the congestion-status recognizer 553 recognizes that congestion is present on the road R12 and predicts that no congestion will arise at an arbitrary position on the travel route to the destination G, various information is superimposed as shown in Fig. 12B. If the congestion-status recognizer 553 recognizes that the congestion on the road R12 is not yet sorted out and predicts that congestion will arise on the road R13 before arriving at the destination G, various information such as the congestion-prediction mark Jy and the accuracy-level information Tc based on the accuracy-level information 135 are superimposed as shown in Fig. 12C.

Subsequently, the processor 430 recognizes the travel progress of the vehicle based on the various data output from the sensor 110. Then, the guidance notifier 183 of the processor 430 notifies the guidance information for guiding the travel of the vehicle in visual or audio form on the basis of the recognized travel progress and the route guidance information contained in the travel route information. (Step S414). The travel-progress detector 431 of the processor 430 generates travel-progress information based on the various information acquired by the current-position recognizer 181, and transmits the generated travel-progress information to the server 500 (Step S415). The processor 430 recognizes whether or not the user has performed input operation demanding to continue the navigation operation. (Step S416). The congestion-status recognizer 553 recognizes the actual traffic condition based on the travel-progress information, the display controller 184 changes the displayed congestion status based on the recognized traffic conditions. If the processor 430 recognizes that the user has performed the input operation demanding to continue the navigation in the Step S416, the operation returns to the Step S414. If, on the other hand, the processor 430 recognizes that the user has performed the input operation demanding to end the navigation, it ends the processing for travel route search.

The server 500 receives the travel-progress information sent from the terminal unit 400 in the Step S415 (Step S417), the prediction information corrector 559 recognizes the current position of the vehicle and the congestion-level of the current-position etc. based on the received travel-progress information. The prediction information corrector 559 recognizes whether or not the recognized current position is included in the zone indicated by the congestion-zone information in the record contained in the congestion-prediction information. If the prediction information corrector 559 determines that the current position is not included, it does not perform any particular processing. If, on the other hand, the prediction information corrector 559 determines that the current position is included, the prediction information corrector 559 determines whether or not the congestion level recognized base on the travel-progress information matches with the congestion-level information 134 of the record contained in the congestion-prediction information. That is, it determines whether or not the congestion-level information 134 of the congestion-prediction information is accurate (Step S418).

If the prediction information corrector 559 determines that the congestion-level information 134 is accurate in the Step S418, it ends the processing. If, on the other hand, the prediction information corrector 559 determines that the congestion-level information 134 is not accurate, it corrects the record of the congestion-prediction information. More specifically, the prediction information corrector 559 reduces the value of the accuracy-level information 135 by 1 and raises the user-correction information 136 by 1. Then, the prediction information corrector 559 updates the prediction information correction-master 13 stored in the storage 540 (Step S419). Specifically, the prediction information corrector 559 retrieves the record used for generating the congestion-prediction information from the prediction information correction-master 13 stored in the storage 540. After that, the prediction information corrector 559 updates the retrieved record to the corrected record and ends the processing.

### [Advantages of Second Embodiment]

In the second embodiment, when the server 500 acquirers the request information requesting the notification of the traffic conditions from the terminal unit 400 over the network 300, the terminal display 140 of the terminal unit 400 displays the accuracy-level information 135 about the reliability of the traffic information such as the congestion information and the congestion-prediction information about the traffic conditions for the vehicle superimposed on the map information together with the traffic information. Therefore, as in the first embodiment, since the traffic conditions are notified together with the reliability thereof, the user can be informed of more appropriate traffic conditions. Accordingly, the user can appropriately drive the vehicle, and the usability is improved, thereby easily expanding the use.

The congestion-status recognizer 553 of the server 500 acquires the prediction information correction-master having information about respective traffic conditions and the accuracy-level information about the traffic conditions for vehicle to generate congestion-prediction information. The terminal unit 400 receives the congestion-prediction information from the server 500, and the display controller 184 makes the display section to display the information about the traffic conditions and the accuracy-level information 135 in the congestion-prediction information. Then, the guidance notifier provides the information about the traffic conditions in audio form. Therefore, with the simple configuration, the terminal unit 400 receives the congestion-prediction information sent from the server 500, so that the user can know the information about the traffic conditions such as congestion and the accuracy level thereof. Accordingly, the user can recognize the reliability of the information about the traffic conditions such as congestion based on the accuracy level, and thus appropriate traffic information can be provided.

The information about the actual traffic conditions detected by the travel-progress detector of the terminal unit 400 is transmitted as the travel-progress information to the server 500, and the prediction information corrector 559 of the server 500 recognizes the travel-progress information and determines the actual traffic conditions so as to correct the congestion-prediction information when it determines that the determined actual traffic conditions do not match with the congestion-prediction information by comparing them. Therefore, the server 500 can appropriately determine the travel-progress information transmitted from many terminal units and correct the congestion-prediction information. Thus stored large volume of corrected information improves the reliability of the accuracy-level information 135. Therefore, with such congestion-prediction information, appropriate information about the traffic conditions can be provided to users.

According to the second embodiment, the server 500 stores the map information and the congestion-prediction table 10 used for the congestion-predictions, of which data volume is relatively large. Therefore, the configuration of the terminal unit 400 can be simplified. Also, when the update of the map information and the congestion-prediction table 10 is performed in the server 500, the terminal units 400 can share the updated information. Thus, the navigation system 200 can be improved in terms of the maintenance and management ability and the operation ability. Further, the terminal units 400 can appropriately acquire the most updated information and provide good navigating according to the most updated information, thereby improving the usability.

The server 500 storing the map information and the congestion-prediction table 10 searches for the travel route and delivers the travel route to the terminal unit 400. With this configuration, the processing load of the terminal units 400 can be reduced. In other words, the terminal unit 400 is not required to have a large processing capacity, so that the terminal unit 400 may be simply configured allowing the use in a mobile phone etc. Thus, the size and the cost thereof can be reduced, and thereby easily promoting the wide use thereof.

Since the processor 180 of the terminal unit 400 and the CPU 550 of the server 500 are configured as programs, the use of the map information is facilitated and thereby promoting the wider use thereof. The programs may be recorded on a recording medium in a manner readable by a computing section, i.e., a computer. With this configuration, the use of the map information can be facilitated and the programs can be easily handled, thereby further expanding the use thereof. The computing section may not necessarily be a single computer but may be a plurality of computers connected over a network, elements such as a CPU and a microcomputer, or a circuit board on which a plurality of electronic parts are mounted.

### [Modification of Embodiment]

The present invention is not limited to the above specific embodiments, but includes modifications and improvements as long as the objects of the present invention can be attained.

The mobile body is not limited to a vehicle, but includes any mobile body such as an airplane or a ship. The user oneself may be the mobile body if the current position of the user carrying the terminal unit 400 is recognized as the current position of the terminal unit 400. Additionally, as mentioned earlier, a mobile phone or a PHS (Personal Handyphone System) may be used as the terminal unit 400 that can be carried directly by the user, while the base station of the mobile phone or the PHS may be used as the server 500. With this arrangement, the mobile phone or the PHS may acquire information from the base station. In any case, as described above, the present invention is most effectively applicable to a mobile body to which congestion can be an obstacle to the travel thereof.

The traffic condition is not limited to congestion status but may include various situations relating to the travel of movable bodies.

The traffic conditions are displayed on the navigation display-screen 30 for traveling along the travel route in the above embodiments, the transition of the traffic conditions may be displayed when a map of a certain area is displayed without searching for travel routes.

The transitions of the traffic conditions may be displayed when a map is displayed on a personal computer etc. instead of having a section for notifying a travel route. While some of the travel routes selected based on the destination information and setting information are transmitted in the above described embodiments, the travel route may be selected, or searched, only on the basis of the current-position information and the destination information.

While the current-position recognizer 181 recognizes the current-position information based on the data output from the various sensors and the GPS data output from the GPS receiver in the above embodiments, other method may alternatively be used to recognize the current position of the mobile body. As described above, the current-position recognizer 181 may recognize the simulated current position input at the terminal input section 130 as the current position.

While the functions are realized in the form of programs in the above description, the functions may be realized in any form including hardware such as a circuit board or elements such as IC (Integrated Circuit). In view of easy handling and promotion of the use, the functions are preferably stored and read from programs or recording media.

While the reliability of the traffic conditions is notified by displaying the accuracy-level information 135 under the display control for displaying the surrounding area map information 141 on the screen in the above embodiments, the reliability may be notified by outputting sounds from the sound output section 150. With this configuration, the user can be informed of the reliability without checking the displayed images on the terminal display 140.

The user-correction information 136 of the prediction information correction-master 13 is the information indicating the number that the accuracy-level information 135 is corrected in the first and the second embodiments. However, the user correction may be the frequency that the accuracy-level information 135 is corrected or may be other information.

In the first embodiment, for notifying the congestion-prediction information, the display controller 184 displays the congestion-prediction mark Jy and the accuracy-level mark Tc on the terminal display 140. However, the configuration is not limited thereto, and the guidance notifier 183 may notify the congestion-prediction information and the accuracy-level information in audio form. In this case, the user can recognize the congestion-prediction information and the accuracy level on the terminal display 140. Even when the user is driving a vehicle and cannot look at the terminal display 140, the user can know the congestion-prediction information and the accuracy level notified in audio form. Therefore, the user can check the congestion-prediction information with the voice guidance in the case user can not look at the terminal display 140, and on the terminal display 140 in the case the user has missed the voice guidance.

While the prediction information correctors 192 and 559 lower the accuracy-level information 135 only when the actual traffic conditions do not match with the congestion-prediction information in the first and the second embodiments, other arrangements may be applicable. For instance, when the traffic conditions substantially match with the congestion-prediction information, the accuracy-level information 135 of the congestion-prediction information may be raised. In this case, the accuracy-level information 135 is not necessarily lowered even if the congestion-prediction information is corrected many times, and the value of the accuracy-level information 135 is raised if the congestion-prediction information is accurate. With this arrangement, since the accuracy-level information 135 varies up and down, the reliability of the congestion-prediction mark Jy displayed based on the congestion-prediction information varies up and down, and thus the appropriate congestion-prediction information reflecting the actual traffic can be notified. If the congestion-prediction information has accuracy number information indicating the number of times that the notified traffic prediction information has matched with the actual traffic conditions, the accuracy rate may be calculated based on the user-correction information 136 and the accuracy number information to be displayed on the terminal display 140. For example, when the value of the user-correction information 136 is 100 and the value of the accuracy number information is 80, the accuracy rate is calculated as 80% and this accuracy rate may be displayed on the accuracy-level mark Tc. If the arrangement in which the accuracy-level information 135 varies up and down or the accuracy rate is calculated in the above described way, statistics can be obtained based on more information with the increase of the number of times of the correction, and hence the reliability of the accuracy-level information is improved. Therefore, appropriate information about the traffic conditions can be provided.

While the prediction information corrector 192 recognizes the accuracy information input at the terminal input section 130 and appropriately corrects the congestion-prediction information in the first embodiment, the configuration is not limited thereto. For instance, the prediction information corrector 192 may automatically recognize that the information is accurate if nothing is input from the terminal input section 130. It may be so set that if nothing is input, no processing is performed thereafter. If the accuracy information is not input, the user can set it in advance and the operation is performed in accordance with this setting. By presetting the processing which will be performed when the accuracy information can not be obtained from the terminal input section 130 in this way, the user is not required to set the accuracy information at the terminal input section every time.

While the user inputs the accuracy information at the terminal input section 130 in the first embodiment, the configuration is not limited thereto. For example, as in the second embodiment, a mobile body may have a travel detector so as to recognize the actual traffic conditions based on the average speed, the travel direction and the coordinate information detected by the travel detector and compare the recognized actual traffic conditions with the congestion-prediction information. In this case, when the average speed during a predetermined time or in a predetermined zone is lower than an arbitrary value set by the user, the condition is recognized as congestion and thus the actual traffic conditions can be recognized. Moreover, with this configuration, the congestion-prediction information is automatically evaluated after the user sets a desired speed, and the user is not required to operate the terminal input section 130.

While the travel-progress detector 431 keeps generating the travel-progress information for the vehicle and sending it to the server 500 in the second embodiment, other configuration may be applicable. For example, when the hand brake is applied or the engine is stopped, it is considered that these operations are performed for stopping or parking the vehicle, and hence the travel-progress detector 431 may be so configured to not send the information to the server 500. Alternatively, the user may select if the user activates the travel-progress detector 431 or not. With this configuration, since the server 500 will not misidentify the stopping or parking state as the congestion state, the terminal unit 400 can transmit the correct traffic conditions to the server 500.

While the congestion-prediction information of the congestion-prediction table 10 has the accuracy-level information 135 and changes the value of the accuracy-level information 135 depending whether or not the congestion-prediction information is accurate in the first and the second embodiments, the configuration is not limited thereto. For example, the congestion-prediction information may have the accuracy-level information 135 for the respective congestion-level information 134. Specifically, the congestion-level information 134 may be classified into three levels defining 1 as smooth condition with no congestion, 2 as crowded condition and 3 as congested condition, and these three levels are respectively provided with the accuracy-level information 135. In this case, the accuracy information to be input should be input by selecting the actual congestion status of the traffic conditions, i.e., any one of "congested", "crowded" and "smooth". The prediction information correctors 192 and 559 raise the accuracy-level information 135 corresponding to the congestion-level information 134 of the recognized accuracy information and lower the accuracy-level information 135 corresponding to other congestion-level information. With this configuration, the congestion-prediction information can store whether or not the notified congestion information was accurate as well as how the condition was. In this way, even if accuracy-level information of certain congestion-level information is lowered, accuracy-level information of other congestion-level information is raised. The traffic conditions can be notified based on the congestion-level information with the statistically highest accuracy-level information, and hence the traffic conditions with high reliability can be provided.

In the case where the traffic conditions are notified over the network as in the second embodiment, the congestion-level information 134 may be classified based on the actual speed range. For example, the congestion-level information 134 is classified based on the average speed, into 0 to 10 km/h, 20 to 30 km/h, and 30 to 40 km/h. The prediction information corrector 559 raises or lowers the accuracy-level information 135 corresponding to respective congestion-level information 134 based on the actual average speed recognized by the travel-progress detector 431. The user sets the speed considered as congested, the speed considered as crowded, and the speed considered as smooth based on the user's sense of speed. With this configuration, since congestion considered as congestion by a user might be considered as crowded by another user, each user can set the speed based on the user's sense of speed in advance. For example, the speed considered as congested is set to the average speed 30 km and the speed considered as crowded is set to 50 km at a terminal unit Q, while the speed considered as congested is set to the average speed 10 km and the speed considered as crowded is set to 30 km at a terminal unit R. And assuming that the accuracy-level information 135 is highest in the congestion-level information 134 in the range of average speed 30 to 40 km/h in congestion-zone information X-Y in congestion-prediction information of the server. In such case, based on the congestion-prediction information transmitted from the server 500, the zone X-Y is displayed as congested at the terminal unit Q whereas the zone X-Y is displayed as crowded at the terminal unit R. With this configuration, the navigation device using the server 500 can acquire the information suitable for the user based on the user's settings. Further, since the accuracy-level information can be updated based on a large volume of information using the server 500, the traffic conditions with high reliability can be can be provided.

The prediction information correctors 192 and 559 may newly add the congestion information to the congestion-prediction information in the first and the second embodiments. For example, assuming that congestion on a zone Y-Z is not contained in the congestion-prediction table 10 at the initial state on navigation without using a server as in the first embodiment. In such case, the congestion on the zone Y-Z is not contained in the congestion-prediction information. If a user is caught in the congestion when passing through the zone Y-Z, the user of the navigation device 100 inputs the congestion information on the zone Y-Z from the terminal input section 130. The prediction information corrector 192 can newly add the congestion information to the congestion-prediction information based on the input information from the terminal input section 130. The congestion information added to the congestion-prediction information is stored in the prediction information correction-master 13 upon the update, and the congestion information is referred hereafter. In this way, new traffic-congestion information is added and hence detailed and appropriate congestion-prediction information can be provided. Further, a route can be searched reflecting the newly added congestion information, thereby improving the accuracy of the route search.

Instead of changing or switching the display images of the various traffic conditions to be superimposed on the map information, the images of traffic conditions representing the transitions thereof are superimposed on the map information in advance and may be switched on the basis of each map information.

While the server 500 stores the map information and the congestion-prediction table 10 in the above described second embodiment, the terminal unit 400 may alternatively stores at least either the map information or the congestion-prediction table 10.

In the second embodiment, the contents of the traffic conditions corrected by the server 500 may be transmitted to the terminal unit 400 to display the traffic conditions with the corrected contents as in the first embodiment.

While the prediction information correctors 192 and 559 correct the congestion-prediction information in the first and the second embodiments, other configurations may be applicable. For instance, the time-series data 12i may be writable data. In this case, there is no need to have the prediction information correction-master 13, and hence the memory capacity of the storage can be saved.

While the transceiver 410 is arranged in the terminal unit 400 in the above description, the transceiver 410 may be separated from the terminal unit 400 and a mobile phone or a PHS may be used as the transceiver 410. In this case, the terminal unit 400 is connected to the transceiver 410 to send/receive information when necessary.

The arrangements and the operating procedures for the present invention may be appropriately modified as long as the scope of the present invention can be attained.

### [Advantages of Embodiments]

As described earlier, the navigation device 100 makes the congestion-status recognizer 187 acquire the congestion information about the traffic conditions for the vehicle and the accuracy-level information 135 about the reliability of the traffic information such as the congestion-prediction information in the above embodiments. Then, the display controller 184 displays the map information with the accuracy-level information 135 acquired by the congestion-status recognizer 187 superimposed thereon. Therefore, since the navigation device 100 notifies not only the traffic conditions but also the accuracy-level information 135 containing the reliability of the traffic conditions, the user can be informed of appropriate traffic conditions.

The navigation device 100 makes the prediction information corrector 192 correct the congestion information about the traffic conditions for the vehicle and the accuracy-level information 135 about the reliability of the traffic information such as the congestion-prediction information. The congestion-status recognizer 187 acquires the corrected accuracy-level information 135. Then, the display controller 184 displays the map information with the accuracy-level information 135 acquired by the congestion-status recognizer 187 superimposed thereon. Accordingly, the navigation device 100 appropriately notifies the corrected accuracy-level information 135, and thus the appropriate traffic conditions can be notified to the user.

In another embodiment, when the server 500 acquirers the request information requesting the notification of the traffic conditions from the terminal unit 400 over the network 300, the congestion-status recognizer 553 acquires the accuracy-level information 135 about the reliability of the traffic information such as the congestion information and the congestion-prediction information about the traffic conditions for the vehicle. The accuracy-level information 135 is transmitted to the terminal unit 400. When the terminal unit 400 receives the accuracy-level information 135 transmitted from the server 500, the display controller 184 displays the map information with the received accuracy-level information 135 superimposed thereon. Therefore, since the navigation system 200 makes the terminal unit 400 notify not only the traffic conditions but also the accuracy-level information 135 containing the reliability of the traffic conditions, the user can be informed of appropriate traffic conditions.

## Claims

1. A traffic-condition notifying device (400) comprising:
a map information acquirer (180, 187) arranged to acquire map information (141);
a traffic information acquirer (120; 552) arranged to acquire traffic information about a current traffic condition for a mobile body;
a congestion prediction information acquirer (553) arranged to obtain congestion prediction information based on statistical traffic information obtained by statistically processing past traffic conditions of mobile bodies; and
a notification controller (183) arranged to control a notifier (183) to notify the congestion prediction information together with the map information,
**characterised in that:**
the traffic-condition notifying device further comprises an accuracy-level information acquirer (187) arranged to acquire accuracy-level information (135) representing a reliability of the congestion prediction information; and
the notification controller is further arranged to control the notifier to notify the accuracy-level information together with the congestion prediction information and map information.

2. The traffic-condition notifying device (400) according to claim 1, wherein the notification controller (183) is arranged to superimpose the accuracy-level information (135) for each corresponding congestion prediction information on the map information (141).

3. The traffic-condition notifying device (400) according to claim 1, wherein the notification controller (183) is arranged to control an audio section (150) to output the congestion prediction information and the accuracy-level information (135) as sounds.

4. The traffic-condition notifying device (400) according to any one of claims 1 to 3, further comprising a correction information acquirer arranged to acquire correction information (136) for correcting the traffic information and/or the accuracy-level information based on the actual traffic condition,
wherein the notification controller (183) is arranged to control the notifier (183) to notify the traffic information together with the accuracy-level information based on the correction information.

5. The traffic-condition notifying device (400) according to claim 4, wherein the notification controller (183) comprises an accuracy-level changer (180) arranged to change the accuracy-level information (135) based on the correction information (136).

6. The traffic-condition notifying device (400) according to claim 5, wherein the accuracy-level changer (180) is..arranged.to change the accuracy-level information (135) according to frequency that the correction information (136) is set.

7. The traffic-condition notifying device (400) according to any one of claims 4 to 6, further comprising:
a travel-progress recognizer (180) arranged to recognise travel progress of a mobile body; and
a traffic-condition recognizer (553) arranged to recognise an actual traffic condition at a point where the mobile body travels based on the travel progress,
wherein the correction information acquirer is arranged to acquire the correction information (136) based on the actual traffic condition recognized by the traffic-condition recognizer.

8. A traffic-condition notifying system (200) comprising:
a server (500) having a storage (540) arranged to store map information (141); and
the traffic-condition notifying device (400) according to any one of claims 1 to 7 arranged to acquire the map information from the server over a network (300).

9. A traffic-condition notifying system (200) comprising:
the traffic-condition notifying device (400) according to any one of claims 1 to 7; and
a terminal unit that is connected to the traffic-condition notifying device over a network (300) arranged to communicate therewith and provided with a notifier (183) arranged to notify the traffic information.

10. A traffic-condition notifying system (200) comprising:
a terminal unit (400) provided with a request information generator (130) arranged to generate request information requesting a notification of a traffic condition, and a notifier arranged to notify (183) traffic condition; and
a server (500) that is connected to the terminal unit over a network (300) arranged to communicate therewith and provided with a storage (540) storing map information (141), a traffic information acquirer (120; 552) arranged to acquire traffic information about current traffic information for.a mobile body, a congestion prediction information acquirer (553) arranged to obtain a congestion prediction information based on statistical traffic information obtained by statistically processing past traffic conditions of mobile bodies, a request information acquirer (187) arranged to acquire the request information, and a notification controller (183) arranged to transmit the congestion prediction information to the terminal unit over the network so that the notifier of the terminal unit can notify the congestion prediction information when recognizing that the request information acquirer acquires the request information,
**characterised in that:**
the server is further provided with an accuracy-level information acquirer (187) arranged to acquire accuracy-level information (135) representing a reliability of the congestion prediction information; and
the notification controller is further arranged to transmit the accuracy-level information to the terminal unit over the.network so that the notifier can notify the accuracy-level information together with the congestion prediction information.

11. A traffic-condition notifying method comprising:
acquiring map information (141), traffic information about a current traffic condition for a mobile body, and congestion prediction information based on statistical traffic information obtained by statistically processing past traffic conditions of mobile bodies; and
making a notifier (183) notify the traffic information together with the map information,
**characterised by**:
further acquiring accuracy-level information (135) about a reliability of the congestion prediction information relative to an actual traffic condition; and
making the notifier notify the accuracy-level information together with traffic information and map information.

12. A traffic-condition notifying program to execute the traffic-condition notifying method according to claim 11 by a computer.

13. A recording medium storing the traffic-condition notifying program according to claim 12 in a manner readable by a computer.

## Patentansprüche

1. Vorrichtung zur Meldung des Verkehrszustands (400) welche umfasst:
eine Einrichtung zur Erlangung von Karteninformation (180, 187), die dazu eingerichtet ist, um Karteninformation (141) zu erlangen;
eine Einrichtung zum Erlangen von Verkehrsinformation (120; 552), die dazu eingerichtet ist, um Verkehrsinformation für einen Mobilen Körper über einen momentanen Verkehrszustand zu erlangen;
eine Einrichtung zur Erlangung von Verkehrsstörungsvorhersageinformation (553), die dazu eingerichtet ist, um Verkehrsstörungsvorhersageinformation basierend auf statistischer Verkehrsinformation zu erhalten, welche durch statistische Verarbeitung vergangener Verkehrszustände von mobilen Körpern erhalten wurde; und
eine Meldungssteuerung (183), die dazu eingerichtet ist, um eine Meldeeinrichtung (183) dahingehend zu steuern, dass die Verkehrsstörungsvorhersageinformation zusammen mit der Karteninformation gemeldet wird,
**dadurch gekennzeichnet, dass:**
die Vorrichtung zur Meldung eines Verkehrszustandes weiterhin eine Einrichtung zur Erlangung von Güteinformation (187) umfasst, die dazu eingerichtet ist, um Güteinformation (135) zu erlangen, welche eine Zuverlässigkeit der Verkehrsstörungsvorhersageinformation repräsentiert; und
die Meldungssteuerung weiterhin dazu eingerichtet ist, um die Meldeeinrichtung dahingehend zu steuern, dass die Güteinformation zusammen mit der Verkehrsstörungsvorhersageinformation und der Karteninformation gemeldet wird.

2. Die Vorrichtung zur Meldung des Verkehrszustands (400) gemäß Anspruch 1, wobei die Meldungssteuerung (183) dazu eingerichtet ist, um die Güteinformation (135) jeder zugeordneten Verkehrsstörungsvorhersageinformation auf der Karteninformation (141) zu überlagern.

3. Die Vorrichtung zur Meldung des Verkehrszustands (400) gemäß Anspruch 1, wobei die Meldungssteuerung (183) dazu eingerichtet ist, um eine Audioeinheit (150) dahingehend zu steuern, dass die Verkehrsstörungsvorhersageinformation und die Güteinformation (135) akustisch ausgegeben wird.

4. Die Vorrichtung zur Meldung des Verkehrszustands (400) gemäß einem der Ansprüche 1 bis 3, welche weiterhin eine Einrichtung zur Erlangung von Korrekturinformation umfasst, die dazu eingerichtet ist, um Korrekturinformation (136) zur Korrektur der Verkehrsinformation und/oder der Güteinformation, basierend auf dem aktuellen Verkehrszustand zu erlangen,
wobei die Meldungssteuerung (183) dazu eingerichtet ist, um die Meldeeinrichtung (183) dahingehend zu steuern, dass die Verkehrsinformation zusammen mit der Güteinformation basierend auf der Korrekturinformation gemeldet wird.

5. Die Vorrichtung zur Meldung des Verkehrszustands (400) gemäß Anspruch 4, wobei die Meldungssteuerung (183) eine Einrichtung zum Ändern der Güteinformation (180) umfasst, die dazu eingerichtet ist, um die Güteinformation (135) basierend auf der Korrekturinformation (136) zu ändern.

6. Die Vorrichtung zur Meldung des Verkehrszustands (400) gemäß Anspruch 5, wobei die Einrichtung zum Ändern der Güteinformation (180) dazu eingerichtet ist, um die Güteinformation (135) gemäß der Häufigkeit zu ändern, mit der die Korrekturinformation (136) gesetzt wird.

7. Die Vorrichtung zur Meldung des Verkehrszustands (400) gemäß einem der Ansprüche 4 bis 6, welche weiterhin umfasst:
eine Einrichtung zur Feststellung des Reisefortschritts (180), die dazu eingerichtet ist, um den Reisefortschritt eines mobilen Körpers zu festzustellen; und
eine Einrichtung zur Feststellung des Verkehrzustandes (553), die dazu eingerichtet ist, um einen aktuellen Verkehrzustand an einem Punkt zu festzustellen, wo sich der mobile Körper basierend auf dem Reisefortschritt bewegt,
wobei die Einrichtung zum Erlangen von Korrekturinformation dazu eingerichtet ist, um die Korrekturinformation (136) basierend auf dem aktuellen Verkehrszustand zu erlangen, welcher von der Einrichtung zur Feststellung des Verkehrzustandes festgestellt wurde.

8. System zur Meldung des Verkehrszustands (200), welches umfasst:
einen Server (500), welcher einen Speicher (540) umfasst, der dazu eingerichtet ist, um Karteninformation (141) zu speichern; und
die Vorrichtung zur Meldung des Verkehrszustands (400) gemäß einem der Ansprüche 1 bis 7, die dazu eingerichtet ist, um Karteninformation vom Server (400) über ein Netzwerk (300) zu erlangen.

9. System zur Meldung des Verkehrszustands (200), welches umfasst:
die Vorrichtung zur Meldung des Verkehrszustands (400) gemäß einem der Ansprüche 1 bis 7; und
eine Endgeräteeinheit, welche mit der Vorrichtung zur Meldung des Verkehrszustands über ein Netzwerk (300) verbunden ist und die dazu eingerichtet ist, um damit zu kommunizieren und die mit einer Meldeeinrichtung (183) ausgestattet ist, die dazu eingerichtet ist, um die Verkehrsinformation zu melden.

10. System zur Meldung des Verkehrszustands (200), welches umfasst:
eine Endgeräteeinheit (400), die mit einer Einrichtung zum Erzeugen von Anforderungsinformation (130) ausgestattet ist, der dazu eingerichtet ist, um eine Anforderungsinformation zu erzeugen, um eine Meldung über einen Verkehrszustand anzufordern, und eine Meldeeinrichtung (183), die dazu eingerichtet ist, um einen Verkehrszustand zu melden; und
einen Server (500), der mit der Endgeräteeinheit über ein Netzwerk (300) verbunden ist, der dazu eingerichtet ist, um damit zu kommunizieren und der einen Speicher (540) aufweist, um Karteninformation (141) zu speichern, einer Einrichtung zum Erlangen von Verkehrsinformation (120; 552), die dazu eingerichtet ist, um Verkehrsinformation für einen mobilen Körper über die momentane Verkehrsinformation zu erhalten, eine Einrichtung zur Erlangung von Verkehrsstörungsvorhersageinformation (553), die dazu eingerichtet ist, um eine Verkehrsstörungsvorhersageinformation basierend auf statistischer Verkehrsinformation zu erhalten, welche durch statistische Verarbeitung vergangener Verkehrszustände von mobilen Körpern erhalten wurde, eine Einrichtung zum Erlangen von Anforderungsinformation (187), die dazu eingerichtet ist, um die Anforderungsinformation zu erlangen und eine Meldungssteuerung (183), die dazu eingerichtet ist, um die Verkehrsstörungsvorhersageinformation über das Netzwerk zur Endgeräteeinheit zu senden so dass die Meldeeinheit der Endgeräteeinheit die Verkehrsstörungsvorhersageinformation melden kann, wenn sie feststellt, dass die Einrichtung zum Erlangen von Anforderungsinformation die Anforderungsinformation erlangt,
**dadurch gekennzeichnet, dass**
der Server weiterhin mit einer Einrichtung zum Erlangen von Güteinformation (187) ausgestattet ist, die dazu eingerichtet ist, um Güteinformation (135) zu erlangen, welche eine Zuverlässigkeit der Verkehrsstörungsvorhersageinformation repräsentiert; und
die Meldungssteuerung weiterhin dazu eingerichtet ist, um die Güteinformation über das Netzwerk zur Endgeräteeinheit zu übertragen, so dass die Meldeeinrichtung die Güteinformation zusammen mit der Verkehrsstörungsvorhersageinformation melden kann.

11. Verfahren zur Meldung des Verkehrszustands, welches umfasst:
erlangen von Karteninformation (141), Verkehrsinformation über einen momentanen Verkehrszustand für einen mobilen Körper und Verkehrsstörungsvorhersageinformation basierend auf statistischer Verkehrsinformation, welche durch statistische Verarbeitung vergangener Verkehrszustände von mobilen Körpern erhalten wurde; und
veranlassen einer Meldeeinrichtung (183) um die Verkehrsinformation zusammen mit der Karteninformation zu melden,
**gekennzeichnet durch**
weiterhin erlangen einer Güteinformation (135) über eine Zuverlässigkeit der Verkehrsstörungsvorhersageinformation bezüglich einem aktuellen Verkehrszustand; und
veranlassen der Meldeeinrichtung um die Güteinformation zusammen mit der Verkehrsinformation und der Karteninformation zu melden.

12. Programm zur Meldung des Verkehrszustands, um das Verfahren zur Meldung des Verkehrszustands gemäß Anspruch 11 mittels eines Computers auszuführen.

13. Ein Speichermedium, welches das Programm zur Meldung des Verkehrszustands gemäß Anspruch 12 auf eine durch einen Computer lesbare Art speichert.

## Revendications

1. Dispositif (400) de notification de l'état du trafic, qui comprend :
un système (180, 187) d'acquisition d'informations cartographiques agencé pour recevoir des informations cartographiques (141),
un dispositif (120; 552) d'acquisition d'informations sur le trafic agencé de manière à permettre à un corps mobile d'acquérir des informations sur l'état du trafic à ce moment,
un dispositif (553) d'acquisition d'informations de prédiction des embouteillages agencé de manière à obtenir des informations de prédiction des embouteillages sur base d'informations statistiques sur le trafic obtenues par un traitement statistique de l'état passé du trafic de corps mobiles et
un dispositif (183) de contrôle de notification agencé de manière à contrôler un dispositif de notification (183) de telle sorte qu'il notifie les informations de prédiction des embouteillages en même temps que les informations cartographiques,
**caractérisé en ce que**
le dispositif de notification de l'état du trafic comprend en outre un dispositif (187) d'acquisition d'informations sur le niveau de précision, agencé pour acquérir des informations (135) sur le niveau de précision qui représentent la fiabilité des informations de prédiction des embouteillages et **en ce que**
le dispositif de contrôle de notification est en outre agencé de manière à contrôler le dispositif de notification de telle sorte qu'il notifie les informations sur le niveau de précision en même temps que les informations de prédiction des embouteillages et que les informations cartographiques.

2. Dispositif (400) de notification de l'état du trafic selon la revendication 1, dont le dispositif (183) de contrôle de notification est agencé de manière à superposer aux informations cartographiques (141) les informations (135) sur le niveau de précision de chaque information correspondante de prédiction des embouteillages.

3. Dispositif (400) de notification de l'état du trafic selon la revendication 1, dont le dispositif (183) de contrôle de notification est agencé de manière à contrôler une partie audio (150) qui délivre acoustiquement les informations de prédiction des embouteillages et les informations (135) sur le niveau de précision.

4. Dispositif (400) de notification de l'état du trafic selon l'une quelconque des revendications 1 à 3, qui comprend en outre un dispositif d'acquisition d'informations de correction agencé de manière à acquérir des informations de correction (136) qui corrigent les informations sur le trafic et/ou les informations sur le niveau de précision en fonction de l'état du trafic à ce moment,
le dispositif (183) de contrôle de notification étant agencé de manière à contrôler le dispositif (183) de notification de telle sorte qu'il notifie les informations sur le trafic en même temps que les informations sur le niveau de précision en fonction des informations de correction.

5. Dispositif (400) de notification de l'état du trafic selon la revendication 4, dont le dispositif (183) de contrôle de notification comprend un dispositif (180) de modification du niveau de précision agencé de manière à modifier les informations (135) sur le niveau de précision en fonction des informations de correction (136).

6. Dispositif (400) de notification de l'état du trafic selon la revendication 5, dont le dispositif (180) de modification du niveau de précision est agencé de manière à modifier les informations (135) sur le niveau de précision en fonction de la fréquence à laquelle la fourniture des informations de correction (136) est réglée.

7. Dispositif (400) de notification de l'état du trafic selon l'une quelconque des revendications 4 à 6, qui comprend en outre :
un dispositif (180) de reconnaissance du progrès du déplacement agencé de manière à reconnaître la progression d'un corps mobile et
un dispositif (553) de reconnaissance de l'état du trafic agencé de manière à reconnaître l'état du trafic à ce moment et au point où le corps mobile se déplace, en fonction de la progression de son déplacement,
le dispositif d'acquisition d'informations de correction étant agencé de manière à acquérir les informations de correction (136) en fonction de l'état du trafic reconnu à ce moment par le dispositif de reconnaissance de l'état du trafic.

8. Système (200) de notification de l'état du trafic, qui comprend :
un serveur (500) doté d'une mémoire (540) agencée de manière à conserver des informations cartographiques (141) et
le dispositif (400) de notification de l'état du trafic selon l'une quelconque des revendications 1 à 7, agencé de manière à acquérir par l'intermédiaire d'un réseau (300) les informations cartographiques délivrées par le serveur.

9. Système (200) de notification de l'état du trafic, qui comprend :
le dispositif (400) de notification de l'état du trafic selon l'une quelconque des revendications 1 à 7 et
une unité de terminal reliée au dispositif de notification de l'état du trafic par un réseau (300) agencé de manière à communiquer avec lui et dotée d'un dispositif (183) de notification agencé de manière à notifier les informations sur le trafic.

10. Système (200) de notification de l'état du trafic, qui comprend :
une unité de terminal (400) dotée d'un générateur (130) d'informations de demande agencé de manière à créer des informations de demande qui demandent une notification de l'état du trafic, ainsi qu'un dispositif de notification agencé pour notifier (183) l'état du trafic et
un serveur (500) relié à l'unité de terminal par un réseau (300) agencé pour communiquer avec cette unité et doté d'une mémoire (540) qui conserve des informations cartographiques (141), un dispositif (120; 552) d'acquisition d'informations sur le trafic agencé de manière à permettre à un corps mobile d'acquérir des informations sur le trafic à ce moment, un dispositif (553) d'acquisition d'informations de prédiction des embouteillages agencé de manière à obtenir des informations de prédiction des embouteillages à partir d'informations statistiques sur le trafic obtenues en traitant statistiquement l'état passé du trafic de corps mobiles, un dispositif (187) d'acquisition d'informations de demande agencé de manière à acquérir les informations de demande et un dispositif (183) de contrôle de notification agencé de manière à transmettre les informations de prédiction des embouteillages à l'unité de terminal par l'intermédiaire du réseau de telle sorte que le dispositif de notification de l'unité de terminal puisse notifier les informations de prédiction des embouteillages lorsqu'il s'avère que le dispositif d'acquisition d'informations de demande a acquis des informations de demande,
**caractérisé en ce que**
le serveur est en outre doté d'un dispositif (187) d'acquisition d'informations sur le niveau de précision, agencé de manière à acquérir des informations (135) sur le niveau de précision qui représentent la fiabilité des informations de prédiction des embouteillages et **en ce que**
le dispositif de contrôle de notification est en outre agencé de manière à transmettre les informations sur le niveau de précision à l'unité de terminal par l'intermédiaire du réseau de telle sorte que le dispositif de notification puisse notifier les informations sur le niveau de précision en même temps que les informations de prédiction des embouteillages.

11. Procédé de notification de l'état du trafic, qui comprend les étapes qui consistent à :
acquérir pour un corps mobile des informations cartographiques (141), des informations sur l'état du trafic à ce moment et des informations de prédiction des embouteillages à partir d'informations statistiques sur le trafic obtenues en traitant statistiquement les états passés du trafic de corps mobiles et
amener un dispositif (183) de notification à notifier les informations de trafic en même temps que les informations cartographiques,
**caractérisé par** des étapes qui consistent à :
en outre, acquérir des informations (135) sur le niveau de précision concernant la fiabilité des informations de prédiction des embouteillages relatives à l'état actuel du trafic et
amener le dispositif de notification à notifier les informations sur le niveau de précision en même temps que les informations sur le trafic et les informations cartographiques.

12. Programme de notification de l'état du trafic destiné à faire exécuter par un ordinateur le procédé de notification de l'état du trafic selon la revendication 11.

13. Support d'enregistrement qui conserve le programme de notification de l'état du trafic selon la revendication 12 d'une manière lisible par un ordinateur.
